# EUROPÄISCHE PATENTSCHRIFT

(11) **EP 3 973 457 B1**
(45) Veröffentlichungstag und Bekanntmachung des Hinweises auf die Patenterteilung: **01.10.2025**
(21) Anmeldenummer: 20709201.6
(22) Anmeldetag: 09.03.2020
(51) Int. Cl.: G06N 3/084, G06N 3/082, G06N 3/045

(54) **KOPPLUNG VON MEHREREN KÜNSTLICH LERNENDEN EINHEITEN MIT EINER PROJEKTIONSEBENE**
COUPLING MULTIPLE ARTIFICIALLY LEARNING UNITS WITH A PROJECTION LEVEL
COUPLAGE DE PLUSIEURS UNITÉS À APPRENTISSAGE ARTIFICIEL AVEC UN PLAN DE PROJECTION

(30) Priorität: 21.05.2019 EP 19175786
(43) Veröffentlichungstag der Anmeldung: 30.03.2022
(73) Patentinhaber: Fraunhofer-Gesellschaft zur Förderung der angewandten Forschung e.V., 80686 München (DE); Universität des Saarlandes, 66123 Saarbrücken (DE)
(72) Erfinder: ZIMMERMANN, Heiko, 66280 Sulzbach (DE); FUHR, Günter, 13187 Berlin (DE); FUHR, Antonie, 14469 Potsdam (DE)
(74) Vertreter: Dehns Germany Partnerschaft mbB
(86) Internationale Anmeldenummer: PCT/EP2020/056274
(87) Internationale Veröffentlichungsnummer: WO 2020/233851

(56) Entgegenhaltungen:
- WO-A1-2018/220566
- US-A- 5 155 801
- US-B1- 10 242 665
- US-B1- 8 775 341
- YAN ZHICHENG ET AL: "HD-CNN: Hierarchical Deep Convolutional Neural Networks for Large Scale Visual Recognition", 2015 IEEE INTERNATIONAL CONFERENCE ON COMPUTER VISION (ICCV), IEEE, 7 December 2015 (2015-12-07), pages 2740 - 2748, XP032866619, DOI: 10.1109/ICCV.2015.314

## Beschreibung

Die vorliegende Erfindung betrifft ein System aus mindestens einer ersten, einer zweiten und einer dritten gekoppelten künstlich lernenden Einheit.

### Stand der Technik

Künstliche Intelligenz spielt mittlerweile in unzähligen Anwendungsbereichen eine zunehmende Rolle. Darunter wird zunächst jede Automatisierung intelligenten Verhaltens und maschinelles Lernen verstanden. Jedoch sind derartige Systeme üblicherweise für Spezialaufgaben vorgesehen und trainiert. Diese Form künstlicher Intelligenz (KI, oder auch AI, artificial intelligence) wird häufig als "schwache KI" bezeichnet und beruht im wesentlichen auf der Anwendung von Berechnungen und Algorithmen zur Simulation intelligenten Verhaltens in einem fest bestimmten Bereich. Beispiele dafür sind Systeme, die in der Lage sind, bestimmte Muster zu erkennen, wie etwa Sicherheitssysteme in Fahrzeugen, oder die bestimmte Regeln erlernen und umsetzen können, wie etwa beim Schachspielen. Gleichzeitig sind diese Systeme in anderen Bereichen im Wesentlichen nutzlos und müssen für andere Anwendungen vollständig neu trainiert oder gar mit völlig anderen Ansätzen ausgebildet werden.

Zur praktischen Umsetzung derartiger künstlicher lernender Einheiten werden unter anderem neuronale Netze eingesetzt. Diese Netze bilden in ihrem Grundsatz die Funktionsweise biologischer Neuronen auf abstrakter Ebene nach. Dabei sind mehrere künstliche Neuronen oder Knoten vorhanden, die miteinander verbunden sind und Signale empfangen, verarbeiten und an andere Knoten übertragen können. Für jeden Knoten sind dann beispielsweise Funktionen, Gewichtungen und Schwellwerte festgelegt, die bestimmen, ob und in welcher Stärke ein Signal an einen Knoten weitergegeben wird.

Gewöhnlich werden die Knoten in Ebenen bzw. Schichten betrachtet, so dass jedes neuronale Netz zumindest eine Ausgabeschicht aufweist. Davor können weitere Schichten als sogenannte verborgene Schichten vorliegen, so dass ein mehrschichtiges Netz gebildet wird. Auch die Eingabewerte bzw. Features können als Schicht betrachtet werden. Die Verbindungen zwischen den Knoten der verschiedenen Schichten werden als Kanten bezeichnet, wobei diese üblicherweise mit einer festen Verarbeitungsrichtung belegt sind. Je nach Netztopologie kann festgelegt sein, welcher Knoten einer Schicht mit welchem Knoten der folgenden Schicht verknüpft ist. Dabei können alle Knoten verbunden sein, aber beispielsweise durch eine erlernte Gewichtung mit dem Wert 0 ein Signal nicht über einen bestimmten Knoten weiter verarbeitet werden.

Die Verarbeitung von Signalen im neuronalen Netz kann durch verschiedene Funktionen beschrieben werden. Im Folgenden wird dieses Prinzip an einem einzelnen Neuron bzw. Knoten eines neuronalen Netzes beschrieben. Aus den mehreren verschiedenen Eingabewerten, die einen Knoten erreichen, wird durch eine Propagierungsfunktion (auch Eingabefunktion) eine Netzeingabe (Netzinput) gebildet. Häufig umfasst diese Propagierungsfunktion eine einfache gewichtete Summe, wobei für jeden Eingabewert eine zugehörige Gewichtung vorgegeben ist. Grundsätzlich sind aber auch andere Propagierungsfunktionen möglich. Dabei können die Gewichtungen als Gewichtsmatrix für das Netz vorgegeben sein.

Auf die so gebildete Netzeingabe eines Knotens wird eine Aktivierungsfunktion angewendet, die abhängig von einem Schwellwert sein kann. Diese Funktion stellt den Zusammenhang zwischen dem Netzinput und dem Aktivitätslevel eines Neurons dar. Es sind verschiedene Aktivierungsfunktionen bekannt, beispielsweise einfache binäre Schwellwertfunktionen, deren Ausgabe damit unterhalb des Schwellwerts Null ist und oberhalb des Schwellwerts die Identität; Sigmoidfunktionen; oder auch stückweise lineare Funktionen mit einer vorgegebenen Steigung. Diese Funktionen werden beim Design eines neuronalen Netzes festgelegt. Das Ergebnis der Aktivierungsfunktion bildet den Aktivierungszustand. Optional kann auch noch eine zusätzliche Outputfunktion oder Ausgabefunktion vorgegeben sein, die auf die Ausgabe der Aktivierungsfunktion angewendet wird und den endgültigen Ausgabewert des Knotens festlegt. Häufig wird hier aber einfach das Ergebnis der Aktivierungsfunktion direkt als Ausgabewert weitergegeben, d.h. als Ausgabefunktion wird die Identität verwendet. Je nach verwendeter Nomenklatur können die Aktivierungsfunktion und die Ausgabefunktion auch als Transferfunktion zusammengefasst werden.

Die Ausgabewerte jedes Knotens werden dann an die nächste Schicht des neuronalen Netzes als Eingabewerte für die jeweiligen Knoten der Schicht weitergegeben, wo die entsprechenden Schritte zur Verarbeitung mit den jeweiligen Funktionen und Gewichten des Knotens wiederholt werden. Je nach Topologie des Netzes können auch rückgerichtete Kanten zu vorherigen Schichten oder zurück in die ausgebende Schicht vorliegen, so dass ein rekurrentes Netz vorliegt.

Die Gewichtungen, mit denen die Eingabewerte jeweils gewichtet werden, können dagegen vom Netz verändert werden und so die Ausgabewerte und Funktionsweise des gesamten Netzes anpassen, was als das "Lernen" eines neuronalen Netzes betrachtet wird.

Dazu wird üblicherweise eine Fehlerrückführung (Backpropagation) im Netz genutzt, d.h. ein Vergleich der Ausgabewerte mit Erwartungswerten und eine Nutzung des Vergleichs zur Anpassung der Eingabewerte mit dem Ziel der Fehlerminimierung. Durch Fehlerrückführung können dann verschiedene Parameter des Netzes entsprechend angepasst werden, beispielsweise die Schrittweite (Lernrate) oder die Gewichte der Eingabewerte an den Knoten. Ebenso können auch die Eingabewerte neu bewertet werden.

Die Netze können dann in einem Trainingsmodus trainiert werden. Entscheidend für die Einsatzmöglichkeiten eines neuronalen Netzes sind auch die verwendeten Lernstrategien. Dabei werden insbesondere die folgenden Varianten unterschieden:
Beim Überwachten Lernen (supervised learning) wird ein Eingangsmuster bzw. ein Trainingsdatensatz vorgegeben und die Ausgabe des Netzes mit dem erwarteten Wert verglichen.

Das Unüberwachte Lernen (unsupervised learning) überlässt das Finden der Zusammenhänge oder Regeln dem System, so dass also nur die zu lernenden Muster selbst vorgegeben werden. Eine Zwischenvariante ist das Teilüberwachte Lernen, bei dem auch Datensätze ohne vorgegebene Einordnungen verwendet werden können.

Beim Verstärkenden Lernen (reinforced learning) oder Q-Lernen wird ein Agent erzeugt, der Belohnungen und Bestrafungen für Aktionen erhalten kann, und der anhand dessen versucht, erhaltene Belohnungen zu maximieren und so sein Verhalten anzupassen.

Eine wesentliche Anwendung von neuronalen Netzen umfasst die Klassifikation von Eingabedaten bzw. Inputs in bestimmte Kategorien oder Klassen, also das Erkennen von Zusammenhängen und Zuordnungen. Dabei können die Klassen auf Basis bekannter Daten trainiert werden und zumindest teilweise vorgegeben sein, oder von einem Netz selbständig erarbeitet bzw. erlernt werden.

Die grundsätzliche Funktionsweise und weitere spezifische Details solcher neuronaler Netze sind im Fach bekannt, beispielsweise aus R. Schwaiger, J. Steinwender, Neuronale Netze programmieren mit Python, Rheinwerk Computing, Bonn 2019.

Ein universell einsetzbares AI-System, das also nicht auf nur eine Spezialaufgabe trainiert ist, würde zu hochdimensionalen Räumen führen und damit exponentiell ansteigende Trainings- und Test-Datensätze benötigen. Echtzeitreaktionen werden damit schnell unmöglich. Es wird daher generell versucht, die Dimensionalität und Komplexität solcher Systeme zu reduzieren. Dabei werden unterschiedliche Lösungsansätze verfolgt. Beispielsweise kann durch Verknüpfen von Datensätzen, Reduzierung der Freiheitsgrade und/oder durch die Einspeisung von bekanntem Wissen in ein System die Komplexität verringert werden. Als anderer Ansatz können korrelierte Daten bzw. voneinander abhängige Datensätze zumindest teilweise getrennt werden, beispielsweise durch Methoden wie die Hauptkomponentenanalyse (Principal Component Analysis). Durch Anwendung von Filtermethoden auf die Merkmale können Daten eliminiert werden, die beim Training eines Netzes nicht oder negativ auffallen, z.B. durch Anwendung von statistischen Tests wie dem Chi-Quadrat-Test oder anderen. Schließlich kann auch die Auswahl der Trainingsdaten selbst als Optimierungsproblem in einem AI-Netz erfolgen. Dabei werden die Trainingsdaten so kombiniert, dass sie möglichst schnell und gut ein neues Netzwerk trainieren können.

Weiterführende Ansätze umfassen unter anderem sogenannte "Convolutional Neural Networks", die in mindestens einer Schicht eines mehrschichtigen vollständig verbundenen Netzes anstelle einfacher Matrixtransformationen Faltungen anwenden. Dafür ist beispielsweise die sogenannte "Deep-Dream"-Methode insbesondere im Bereich der Bilderkennung bekannt, bei der in einem trainierten Netz die Gewichte optimal belassen werden, aber stattdessen die Eingangswerte (z.B. ein Eingangsbild) als Rückkopplungsschleife abhängig von Ausgabewert modifiziert werden. Damit wird beispielsweise das eingeblendet, was das System zu identifizieren glaubt. Der Name bezieht sich darauf, dass dabei traumartige Bilder entstehen. Auf diese Weise können interne Prozesse des neuronalen Netzes und ihre Richtung nachverfolgt werden.

Dabei ist ersichtlich, dass diese Methoden immer noch große Unterschiede zur menschlichen Intelligenz aufweisen. Zwar können die Datenbanken, Textdateien, Bilder und Audiodateien grundsätzlich damit verglichen werden, wie auch im Gehirn Fakten, Sprache, Sprachlogik, Geräusche, Bilder und Ereignisabläufe abgespeichert und verarbeitet werden; jedoch unterscheidet sich die menschliche Intelligenz beispielsweise wesentlich dadurch, dass sie all diese Daten im Zusammenhang mit Gefühlen und unbewussten "weichen" Kategorisierungen verknüpft.

US10242665B1 beschreibt ein Steuersystem, das den Betrieb von neuronalen Netzen auf bestimmte Bedingungen oder Grenzwerte beschränkt, um fehlerhafte Ausgaben zu verhindern. Das System erkennt Abweichungen automatisch und kann betroffene Netze in Echtzeit korrigieren oder ersetzen, insbesondere in autonomen Fahrzeugen.

YAN, Zhicheng et al. HD-CNN: Hierarchical Deep Convolutional Neural Networks for Large Scale Visual Recognition. In: 2015 IEEE International Conference on Computer Vision. 2015. DOI 10.1109/ICCV.2015.314. beschreibt eine hierarchische Architektur namens HD-CNN, bei der ein Bildklassifikationsproblem in zwei Stufen unterteilt wird: einfache Klassen werden von einem groben Klassifikator unterschieden, während schwierige Klassen von spezialisierten Fein-Klassifikatoren behandelt werden.

### Offenbarung der Erfindung

Erfindungsgemäß wird ein Verfahren in einem System aus gekoppelten künstlich lernenden Einheiten und ein System, das dieses Verfahren ausführt mit den Merkmalen der unabhängigen Patentansprüche vorgeschlagen. Vorteilhafte Ausgestaltungen sind Gegenstand der Unteransprüche sowie der nachfolgenden Beschreibung.

Insbesondere wird ein Verfahren in einem System aus mindestens einer zweiten und einer dritten künstlich lernenden Einheit vorgeschlagen, welches ein Eingeben von ersten Eingabewerten an mindestens eine zweite künstlich lernende Einheit, und Erhalten von Ausgabewerten auf Grundlage der Eingabewerte von der mindestens einen zweiten künstlich lernenden Einheit; ein mindestens vorübergehendes Speichern von Situationsdaten, wobei die Situationsdaten erste Eingabewerte und/oder zweite Ausgabewerte der mindestens einen zweiten Einheit umfassen; ein Verwenden der Situationsdaten als Eingabewerte der dritten künstlich lernenden Einheit, wobei die dritte künstlich lernende Einheit dritte Ausgabewerte in Reaktion auf die Eingabewerte erzeugt; und ein Prüfen umfasst, ob die zweiten Ausgabewerte der mindestens einen zweiten Einheit eine oder mehrere vorgegebene Bedingungen erfüllen, auf Grundlage der dritten Ausgabewerte. Auf diese Weise kann eine der Einheiten als validierende Einheit wirken, die Lösungen von einer oder mehreren anderen Einheiten im System bewertet, überwacht oder auf andere Weise validiert, insbesondere auf das Einhalten bestimmter Rahmenbedingungen, die in der validierenden Einheit vorgegeben oder ausgebildet sein können.

Dabei können die zweiten Ausgabewerte verworfen werden, falls die Prüfung ergibt, dass die Ausgabewerte mindestens eine vorgegebene Bedingung nicht erfüllen. Zusätzlich oder alternativ kann das Verfahren weiter eine Entscheidung umfassen, ob zumindest ein Teil der aktuellen Situationsdaten dauerhaft gespeichert werden sollen, und ein Übertragen der Situationsdaten, die dauerhaft gespeichert werden sollen, an einen Langzeitspeicher.

Je nach Ausführungsform kann das Entscheiden, ob zumindest ein Teil der aktuellen Situationsdaten dauerhaft gespeichert werden soll, abhängig sein von dem Ergebnis des Prüfens, ob die zweiten Ausgabewerte eine oder mehrere vorgegebene Bedingungen erfüllen.

Optional kann das Speichern der Situationsdaten weiter das Speichern von Zeitinformationen für die Eingabewerte und/oder Ausgabewerte umfassen, wobei es beispielsweise möglich ist, dass die Zeitinformationen eines oder mehrere Zeitintervalle umfassen, denen ein oder mehrere Eingabewerte und/oder Ausgabewerte zugeordnet werden. Damit kann aus Eingabewerten und/oder Ausgabewerten eine zeitliche Sequenz bzw. mehrere zeitliche Sequenzen gebildet werden, die gemeinsam verarbeitet werden können und eine Einordnung in Bezug auf Situationen, Ereignisse oder andere Daten ermöglichen.

Es kann eine Zeitspanne vorgegeben sein, für welche die Situationsdaten mindestens vorübergehend gespeichert werden, wobei mindestens eine der künstlich lernenden Einheiten dazu eingerichtet sein kann, die Zeitspanne festzulegen oder zu ändern. Dies kann beispielsweise die dritte Einheit sein, die die Zeitspanne auf Grundlage ihrer Ausgabewerte oder anderer Auswertungen ändern kann, es können aber auch andere künstlich lernende Einheiten des Systems eine vorgegebene Zeitspanne verkürzen oder verlängern. Ebenso kann die Zeitspanne flexibel angegeben sein, oder für unterschiedliche Daten unterschiedlich bemessen sein.

Gemäß beispielhafter Ausführungsformen umfasst das Verfahren weiter das Vergleichen von aktuellen Ausgabewerten der mindestens einen zweiten Einheit mit Ausgabewerten, die in den Situationsdaten gespeichert sind. Der Vergleich kann beispielsweise von der dritten Einheit vorgenommen werden. Ein derartiger Vergleich ermöglicht einen Rückgriff auf vorherige Ausgabewerte, d.h. frühere Lösungen, optional auch zusammen mit den zugehörigen Eingabewerten, und kann damit ein Erfahrungslernen nachbilden. Außerdem kann ein Vergleich der Ausgabewerte verwendet werden, um die Qualität der Ausgabewerte zu bewerten oder um festzustellen, ob eine aktuelle Lösung eine oder mehrere vorgegebene Bedingungen schlechter oder besser erfüllt.

Das System umfasst eine erste künstlich lernende Einheit, wobei die ersten Eingabewerte an die erste künstlich lernende Einheit eingegeben werden und erste Ausgabewerte der ersten künstlich lernenden Einheit ausgegeben werden. Auf Grundlage der Ausgabewerte der ersten und/oder der dritten künstlich lernenden Einheit werden eine oder mehrere Modulationsfunktionen gebildet, welche anschließend auf einen oder mehrere Parameter der zweiten künstlich lernenden Einheit angewendet werden, wobei die ein oder mehreren Parameter die Verarbeitung von Eingabewerten und das Gewinnen von Ausgabewerten in der zweiten künstlich lernenden Einheit beeinflussen. Damit kann die Verarbeitung von Eingabewerten in der zweiten Einheit beeinflusst werden, ohne direkt die Parameter selbst vorzugeben.

In bestimmten Ausführungsformen kann jeder der künstlich lernenden Einheiten ein Klassifikationsspeicher zugeordnet sein, wobei jede der künstlich lernenden Einheiten bei der Erzeugung der Ausgabewerte eine Einordnung der Eingabewerte in ein oder mehrere Klassen vornimmt, welche in dem Klassifikationsspeicher gespeichert sind, wobei die Klassen jeweils in einer oder mehreren abhängigen Ebenen strukturiert sind, und wobei eine Anzahl der Klassen und/oder der Ebenen in einem Klassifikationsspeicher der ersten oder der dritten künstlich lernenden Einheit geringer ist als eine Anzahl der Klassen und/oder der Ebenen in einem Klassifikationsspeicher der zweiten künstlich lernenden Einheit. Die Asymmetrie zwischen den Speichern der unterschiedlichen Einheiten kann dafür sorgen, dass jede Einheit eine spezifische Aufgabe erfüllt. Beispielsweise kann die erste Einheit als schnell oder grob kategorisierende Einheit ausgeführt sein, während die zweite Einheit, die einen wesentlich komplexeren Speicher aufweist, als tief analysierende Einheit ausgeführt sein kann.

In allen Ausführungsformen umfasst die erste künstlich lernende Einheit ein neuronales Netz, und die zweite künstlich lernende Einheit umfasst ebenfalls ein neuronales Netz. Es ist auch möglich, dass alle der künstlich lernenden Einheiten eines Systems als neuronale Netze ausgebildet sind. Je nach Art der ausgeführten Funktionen kann die dritte künstlich lernende Einheit jedoch auch andere Formen des maschinellen Lernens umsetzen.

Die Eingabewerte, die mindestens an die erste und/oder zweite Einheit eingegeben werden, können durch einen oder mehrere Sensoren erfasste Messwerte, durch eine Benutzerschnittstelle erfasste Daten, aus einem Speicher abgerufene Daten, über eine Kommunikationsschnittstelle empfangene Daten, und/oder von einer Recheneinheit ausgegebene Daten, oder eine beliebige Kombination dieser Möglichkeiten sein.

Es wird außerdem ein System vorgeschlagen, welches drei oder mehrere künstlich lernende Einheiten umfasst sowie Mittel zum Erfassen von Eingabewerten, die als erste Eingabewerte in eine erste und eine zweite künstlich lernende Einheit eingegeben werden (z.B. die genannten Sensoren, Schnittstellen oder andere); außerdem umfasst das System mindestens eine Benutzerschnittstelle zum Ausgeben von Gesamtausgabewerten an einen Benutzer, wobei die Gesamtausgabewerte auf Grundlage von Ausgabewerten von einer oder mehrerer der künstlich lernenden Einheiten gebildet werden, und wobei das System dazu eingerichtet ist, ein Verfahren mit beliebigen Kombinationen aus den vorstehend beschriebenen Verfahrensschritten auszuführen.

Weitere Vorteile und Ausgestaltungen der Erfindung ergeben sich aus der Beschreibung und der beiliegenden Zeichnung.

Es sollte beachtet werden, dass die Bezeichnungen als "erste", "zweite" und "dritte" Einheit hier im Sinne von referenzierenden Bezeichnern für Einheiten mit bestimmten Funktionen, wie sie im Zusammenhang jeweils beschrieben sind, verwendet werden und nicht zwingend als Ordnungszahlen zu verstehen sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung beschrieben.

### Figurenbeschreibung

Figur 1 zeigt eine Kombination aus zwei miteinander gekoppelten künstlich lernenden Einheiten;
Figur 2 zeigt schematisch verschiedene beispielhafte Modulationsfunktionen;
Figur 3 veranschaulicht die Anwendung eines Dropout-Verfahrens in zwei gekoppelten neuronalen Netzen gemäß einer Ausführungsform;
Figur 4 zeigt ein System wie in Figur 1 mit einem zusätzlichen Timer;
Figur 5 stellt schematisch ein System wie in Figur 1 mit den zugeordneten Klassifikationsspeichern dar;
Figur 6 zeigt ein alternatives System mit drei gekoppelten künstlich lernenden Einheiten,
Figur 7 zeigt ein beispielhaftes erweitertes System mit einer dritten künstlich lernenden Einheit und einer Projektionsebene; und
Figur 8 zeigt das System aus Figur 7 mit zugehörigen Speicherelementen.

### Detaillierte Beschreibung von Ausführungsformen

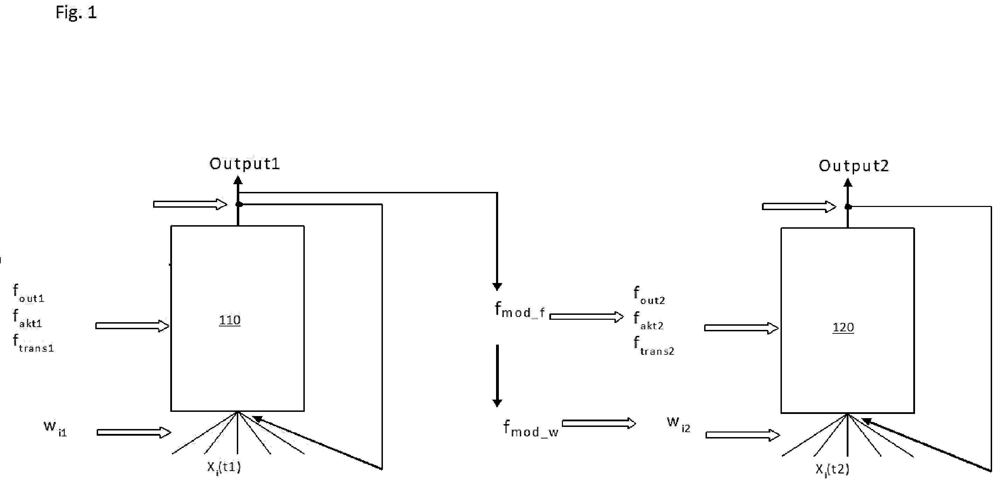

Figur 1 zeigt eine beispielhafte Ausführungsform mit zwei verknüpften künstlich lernenden Einheiten 110, 120, die im Folgenden genauer beschrieben wird. Die künstlich lernenden Einheiten sind in den folgenden Erläuterungen beispielhaft als neuronale Netze ausgebildet.

Dabei ist eine erste künstlich lernende Einheit, hier in Form eines ersten neuronalen Netzes 110 vorgesehen, das im Wesentlichen dazu dienen kann, die Eingangssignale Xᵢ zu kategorisieren und mit dem Ergebnis dieser Kategorisierung eine zweite künstlich lernende Einheit 120, hier ein zweites neuronales Netz, zu beeinflussen. Dabei werden die Ergebnisse des ersten neuronalen Netzes bevorzugt nicht als Eingangswerte für das zweite neuronale Netz genutzt, sondern zur Beeinflussung von vorhandenen Gewichtungen, Schrittweiten und Funktionen des Netzes. Insbesondere können diese Parameter des zweiten neuronalen Netzes so beeinflusst werden, dass sie nicht vollständig neu festgelegt werden, sondern die ursprünglichen Parameter des zweiten Netzes 120 auf Grundlage der Ausgangssignale des ersten neuronalen Netzes 110 moduliert bzw. überlagert werden. Dies bedeutet, dass die beiden neuronalen Netze ansonsten bevorzugt eigenständig arbeiten, z.B. ihre Grundwerte selbst trainieren, und dabei aber durch eine Überlagerung gekoppelt sein können. Dabei können die beiden neuronalen Netze im Wesentlichen ähnlich zueinander gestaltet sein, aber beispielsweise mit deutlich unterschiedlichen Komplexitätsgraden, wie etwa der Anzahl der vorhandenen Schichten und Klassifizierungen. Weiter besitzt jedes der neuronalen Netze seinen eigenen Speicher.

In einer möglichen Ausführungsform kann dabei das erste neuronale Netz 110 als kategorisierendes Netz genutzt werden, das dazu dient, die Eingabewerte grob und schnell zu kategorisieren, während dann auf dieser Grundlage des Kategorisierungsergebnisses durch Modulation von Parametern des zweiten Netzes dieses entsprechend beeinflusst wird. Zu diesem Zweck kann als erstes neuronales Netz ein Netz mit vergleichsweise wenigen Ebenen vorgesehen sein, das einen Speicher mit wenigen Klassen K₁, K₂, ...Kₙ aufweist, die bevorzugt stark abstrahiert sind, um eine grobe Einordnung zu erreichen. Beispielsweise könnte dieses erste neuronale Netz auf 10, 50, 100 oder 500 Klassen beschränkt sein, wobei diese Zahlen selbstverständlich nur als grobe Beispiele zu verstehen sind. Dabei kann das Training des ersten neuronalen Netzes insbesondere einzeln und unabhängig von weiteren gekoppelten neuronalen Netzen erfolgen. Zusätzlich oder alternativ kann aber auch eine Trainingsphase in einem gekoppelten Zustand mit einem oder mehreren gekoppelten neuronalen Netzen genutzt werden.

Das erste neuronale Netz soll damit innerhalb einer kurzen Zeit eine verwertbare Ausgabe liefern, mit der das zweite neuronale Netz sinnvoll beeinflusst werden kann. Aus den Ausgabewerten *Output1* des ersten neuronalen Netzes 110 können Gewichte und Funktionen erzeugt werden, die den selbsterzeugten Gewichten und Funktionen des zweiten neuronalen Netzes 120 überlagert werden können. Dies bedeutet, dass das zweite neuronale Netz zunächst eigenständig funktioniert und die Ausgabewerte des ersten Netzes bzw. die daraus gewonnenen Parameter nicht vollständig übernimmt. Auch das zweite neuronale Netz 120 kann zunächst eigenständig auf übliche Weise trainiert werden und dadurch selbstgenerierte Gewichte aufweisen.

Dabei kann das zweite neuronale Netz deutlich komplexer als das erste neuronale Netz gestaltet sein und insbesondere mehr Ebenen und/oder Speicherklassen aufweisen. Der Grad, um den die Komplexität des zweiten Netzes gegenüber dem ersten Netz erhöht ist, kann dabei je nach Anwendungsfall unterschiedlich festgelegt sein. Die Eingabewerte bzw. Inputdaten für das zweite neuronale Netz sind dabei bevorzugt dieselben Eingabewerte wie für das erste neuronale Netz, so dass nun mit denselben Daten eine komplexere Analyse vorgenommen werden kann. Alternativ können aber zumindest teilweise auch Ausgabewerte des ersten neuronalen Netzes als Eingabewerte des zweiten Netzes verwendet werden. Insbesondere bei einer deutlich unterschiedlichen Komplexität des zweiten Netzes könnte beispielsweise ein zweites Netz vorgesehen sein, dem sowohl die ursprünglichen Eingabewerte, die auch für das erste Netz als Eingabewerte dienten, als Eingabewerte zugeführt werden, als auch zusätzlich die Ausgabewerte des ersten Netzes als Eingabewerte des zweiten Netzes verwendet werden.

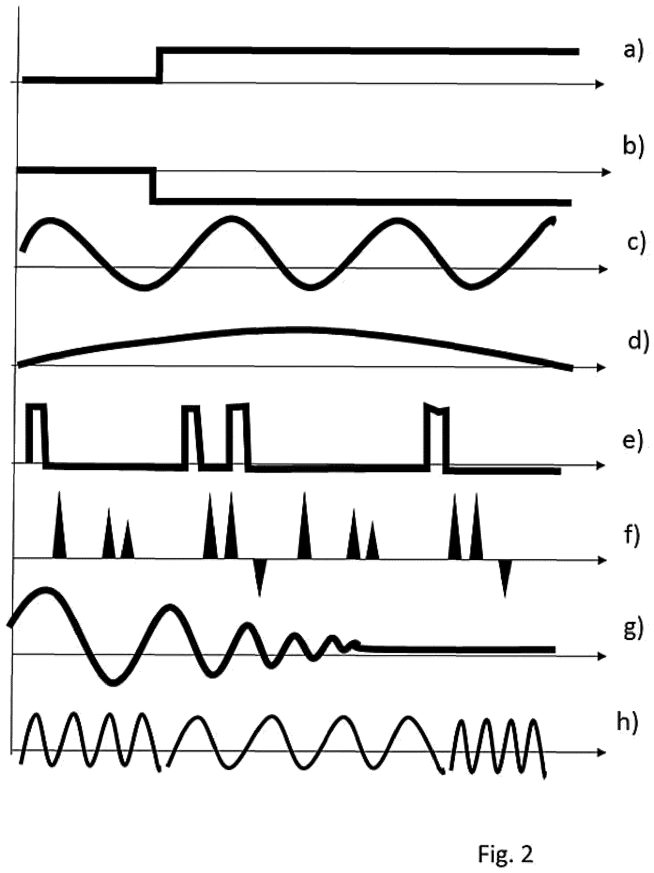

Figur 2 zeigt beispielhaft verschiedene Modulationsfunktionen f_{mod}, mit denen ein oder mehrere Parameter des zweiten neuronalen Netzes überlagert werden können. Dabei kann die Überlagerung bzw. Modulation grundsätzlich auf beliebige Weise stattfinden. Wenn eine Modulationsfunktion f_{mod_w} auf die Gewichtungen wᵢ₂ der Knoten angewendet wird, kann beispielsweise vorgesehen sein, dass die Gewichtungsmatrix des zweiten Netzes 120 als Argument der Modulationsfunktion eingesetzt wird, oder es können eindimensionale (auch unterschiedliche) Funktionen für jeden einzelnen der Gewichtungswerte wᵢ₂ vorgesehen sein. Wenn eine Modulationsfunktion f_{mod_f_} auf eine der beschreibenden Funktionen des zweiten neuronalen Netzes angewendet wird, also auf eine Transferfunktion fₜᵣₐₙₛ₂, eine Aktivierungsfunktion fₐₖₜ₂, eine Propagierungsfunktion oder eine Ausgabefunktion fₒᵤₜ₂ des Netzes 120, kann dies durch eine Verknüpfung der beiden Funktionen geschehen, wobei auch hier eine Modulationsfunktion f_{mod_f} entweder auf nur einen Teil oder alle relevanten beschreibenden Funktionen angewendet werden kann (z.B. auf alle Aktivierungsfunktionen fₐₖₜ₂ des zweiten neuronalen Netzes 120). Es können Modulationen gleichwertig an allen Knoten eines Netzes oder alternativ auch nur auf einen Teil der Knoten angewendet werden, oder für jeden Knoten anders moduliert werden. Ebenso kann beispielsweise für jede Schicht eines Netzes getrennt oder auf andere Weise gestaffelt moduliert werden.

Insbesondere können die Modulationsfunktionen f_{mod} auch zeitabhängige Funktionen sein, so dass die Gewichtungen wᵢ₂ oder Funktionen des zweiten neuronalen Netzes zeitabhängig geändert werden. Es sind aber ebenso statische Modulationsfunktionen zur Modulation des zweiten neuronalen Netzes denkbar. Dabei wird die Modulation auf die Parameter des zweiten Netzes 120 angewendet, die bereits ursprünglich für dieses zweite Netz definiert sind (wie etwa die Propagierungsfunktionen oder die Aktivierungsfunktionen), oder die in der Trainingsphase selbständig gewonnen wurden, wie etwa die angepassten selbstgenerierten Gewichte.

Als Beispiele dafür sind in Figur 2 acht verschiedene zeitabhängige Modulationsfunktionen dargestellt. Beispiel a) zeigt eine einfache binäre Stufenfunktion, bei der bis zu einer vorgegebenen Zeit der Wert null und anschließend ein Wert größer null vorgegeben ist. Dabei kann der zweite Wert grundsätzlich 1 sein, könnte aber auch einen anderen Wert aufweisen, so dass die ursprünglichen Parameter zusätzlich mit einem Faktor beaufschlagt werden. Auf diese Weise wird z.B. eine Gewichtung zeitabhängig ein- und abgeschaltet oder zeitabhängig verstärkt. Beispiel b) zeigt eine umgekehrte Situation, in der eine Stufenfunktion mit einem zweiten Wert kleiner als Null vorgegeben. Ebenso sind alternativ zu den Varianten aus Beispiel a) und b) Stufenfunktionen denkbar, die zwei verschiedene Werte ungleich 0 umfassen, so dass der Pegel entsprechend zeitabhängig angehoben oder abgesenkt wird.

Beispiel c) zeigt eine periodische Modulationsfunktion, die ebenfalls auf jeden beliebigen Parameter des zweiten Netzes angewendet werden kann und auf diese Weise zeitabhängig periodisch bestimmte Elemente verstärken oder abschwächen wird. Dabei könnten beispielsweise auch für unterschiedliche Knoten und/oder unterschiedliche Schichten jeweils verschiedene Amplituden und/oder Perioden für eine derartige Funktion gewählt werden. Jede beliebige periodische Funktion kann an dieser Stelle verwendet werden, etwa eine Sinus-Funktion oder auch nichtstetige Funktionen. Je nach Art der Verkettung der Funktionen mit den selbstgenerierten Funktionen des zweiten Netzes können nur positive oder auch negative Funktionswerte gewählt werden.

In Beispiel d) ist eine langsame kontinuierliche vorübergehende Anhebung und Absenkung des Pegels gezeigt. Beispiel e) dagegen beschreibt kurzzeitige, annähernd rechteckförmige hohe Pegel bei ansonsten niedrigem Funktionswert, der optional auch null sein kann. Ähnlich sind in Beispiel f) unregelmäßig verteilte und sehr kurze Spitzen oder Spikes zu sehen, die also für einen sehr kurzen Zeitraum eine Pegelerhöhung bewirken. Dabei weisen die Spitzen hier unterschiedliche Amplituden auf und können sowohl nach positive als auch negative Werte (relativ zum Grundwert) annehmen. Für die Varianten aus den Beispielen e) und f) können sowohl regelmäßige, periodische als auch zeitlich völlig unregelmäßige (z.B. stochastisch ermittelte) Verteilungen der Spitzen bzw. Verstärkungen vorliegen. Dabei können kurze Pegelerhöhungen beispielsweise etwa innerhalb der Zeit eines Entscheidungszyklus des zweiten neuronalen Netzes liegen, während länger ausgeprägte Pegelveränderungen sich über mehrere Entscheidungszyklen erstrecken können.

Beispiel g) in Figur 2 zeigt weiter eine gedämpfte Schwingung, die ebenfalls beliebig mit verschiedenen Dämpfungen und Amplituden ausgestaltet sein könnte. Schließlich ist in Beispiel h) eine zeitliche Abfolge aus unterschiedlichen Schwingungen um den Grundwert gezeigt, wobei sich hier insbesondere die Periodenlängen der Schwingungen unterscheiden, während die Amplitude gleich bleibt. Diese Kombination unterschiedlicher Schwingungen kann auch als additive Überlagerung, d.h. Schwebung ausgebildet sein.

Generell sind beliebige Modulationsfunktionen denkbar und die gezeigten Funktionen aus Figur 2 nur als Beispiel zu verstehen. Insbesondere sind beispielsweise beliebige Kombinationen der aufgeführten Beispielfunktionen möglich. Es versteht sich auch, dass die gezeigte Grundlinie in allen Beispielen je nach gewünschtem Effekt der Modulationsfunktion bei 0 oder bei einem anderen Grundwert verlaufen kann. Bei einer reinen Verkettung der Modulationsfunktion mit der jeweiligen modulierten Funktion kann mit einem Grundwert von 0 und entsprechenden Erhöhungen des Funktionswerts dafür gesorgt werden, dass der jeweilige Knoten nur zeitabhängig zur Verarbeitung beiträgt und zu anderen Zeiten abgeschaltet ist. Mit einem Grundwert von 1 kann dagegen erreicht werden, dass z.B. mit dem Beispiel aus Figur 2a) eine Modulationsfunktion, die auf die Gewichtungen angewendet wird, zunächst als Grundwert die selbstgenerierten Gewichte des modulierten Netzes wiedergibt und dann, ab dem abgestuften höheren Wert, entsprechend verstärkte Gewichte aufweist. Entsprechend wirkt eine derartige Funktion auch auf die Modulierung der Funktionen, wie etwa der Aktivierungsfunktion.

Wie bereits beschrieben, kann eine Modulationsfunktion auf Grundlage der Ausgabewerte einer ersten künstlich lernenden Einheit gebildet werden, also im vorliegenden Beispiel auf Grundlage des ersten neuronalen Netzes. Der Zusammenhang zwischen den Ausgabewerten und der daraus gebildeten Modulationsfunktion kann beliebig gestaltet werden. Beispielsweise kann dieser Zusammenhang mindestens zum Teil in einer gemeinsamen Trainingsphase des gekoppelten Netzes erzeugt werden. In anderen Ausführungsformen kann vorgegeben sein, wie die Abhängigkeit zwischen den Modulationsfunktionen und den Ausgabewerten des ersten Netzes gestaltet ist. Optional könnte auch entschieden werden, dass bei bestimmten Ausgabewerten zunächst keine Modulation des zweiten Netzes erfolgt.

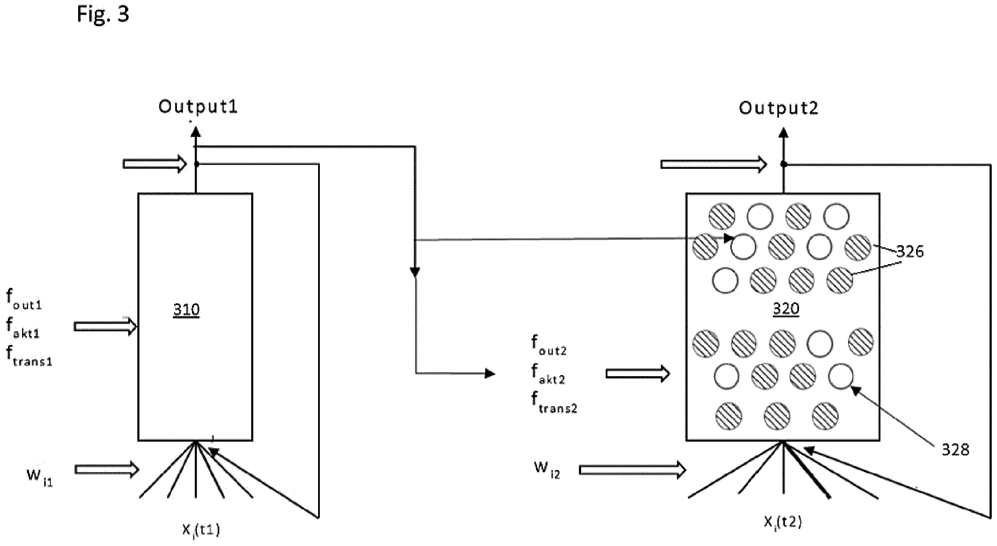

Alternativ oder zusätzlich zu der Anwendung von Modulationsfunktionen auf die Gewichte und Funktionen eines zweiten neuronalen Netzes kann auch ein gekoppeltes Dropout-Verfahren angewendet werden, das in Figur 3 dargestellt ist. Dabei handelt es sich herkömmlich um ein Trainingsverfahren für ein neuronales Netz, bei dem in jedem Trainingszyklus nur ein Teil der vorhandenen Neuronen in den verborgenen Schichten und der Eingangsschicht genutzt werden und die übrigen nicht verwendet werden ("drop out"). Zu diesem Zweck wird üblicherweise im Stand der Technik eine Dropout-Rate auf Grundlage der rückgeführten Fehler des Netzes festgelegt, die bestimmt, wie groß der Anteil der abgeschalteten Neuronen am gesamten Netz ist. Ebenso könnten anstelle von Neuronen ein Teil der Kanten bzw. Verbindungen zwischen Neuronen abgeschaltet werden.

Eine derartige teilweise Abschaltung von Neuronen und/oder Kanten kann nun in beispielhaften Ausführungsformen ebenfalls in einem zweiten neuronalen Netz eingesetzt werden, wobei nun die Dropout-Parameter nicht auf Grundlage der Fehlerrückführung des Netzes selbst, sondern wie bei der zeitabhängigen Modulation in Abhängigkeit von den Ausgabewerten eines ersten neuronalen Netzes eingesetzt werden. Dabei kann beispielsweise auf Grundlage der Ausgabewerte Output1 des ersten neuronalen Netzes 310 eine Dropout-Rate für das zweite neuronale Netz festgelegt werden, die dann auf das zweite Netz angewendet wird. Die Figur zeigt erneut zwei gekoppelte Netze 310, 320 wie in Figur 1, wobei nun die Neuronen bzw. Knoten 326, 328 des zweiten Netzes 320 schematisch als Kreise angedeutet sind. Dabei sind die verbindenden Kanten nicht gezeigt, und die Anordnung der dargestellten Neuronen soll keinen zwingenden Bezug zu ihrer tatsächlichen Topologie haben. Über die Dropout-Rate wird nun ein Teil der vorhandenen Neuronen deaktiviert und damit nicht verwendet. Die aktiven Neuronen 326 des zweiten Netzes sind in der Figur schraffiert dargestellt, während die nicht ausgefüllten Neuronen die Dropout-Neuronen 328 darstellen sollen.

Auf allgemeine Weise kann das hier beschriebene gekoppelte Dropout auch als Modulationsfunktion f_{mod} verstanden werden, indem als Modulationsfunktion für das Gewicht oder z.B. die Ausgabefunktion jedes einzelnen Knotens entweder 0 oder 1 eingesetzt wird. Dabei kann auf Grundlage der Ausgabewerte des ersten Netzes bestimmt werden, welche der Neuronen 326, 328 abgeschaltet werden, oder es kann nur die Rate vorgegeben werden und über stochastische Funktionen bestimmt werden, welches Neuron abgeschaltet wird. Auch die Dropout-Rate kann dabei wiederum auf Grundlage der Ausgabewerte Output1 des ersten Netzes 310 festgelegt werden. Dabei kann eine Dropout-Modulationsfunktion optional auch eine zeitabhängige Abschaltung bewirken, was z.B. einer Verkettung einer Dropout-Funktion mit einer wie in Figur 2 gezeigten Modulationsfunktion entsprechen würde. Ebenso kann auch eine Folge von Musterabschaltungen eingesetzt werden, die sich in einem vorherigen Training bewährt haben, so dass beispielsweise zyklische Mustervariationen zur Abschaltung in dem zweiten neuronalen Netz 320 eingesetzt werden.

Generell kann das Dropout dafür sorgen, dass die Arbeitsgeschwindigkeit eines neuronalen Netzes erhöht wird. Außerdem wird vermieden, dass sich benachbarte Neuronen in ihrem Verhalten zu sehr annähern. Das gekoppelte Dropout wie vorstehend beschrieben kann sowohl in einer gemeinsamen Trainingsphase eingesetzt werden, in der die beiden Netze gekoppelt sind, als auch in einem bereits trainierten Netz eingesetzt werden.

Um sicherzustellen, dass die gekoppelten neuronalen Netze sich sinnvoll ergänzen, kann festgelegt werden, welches der neuronalen Netze zu jedem Zeitpunkt das Gesamtsystem dominiert. Als dominierendes Netz bzw. Dominanz kann dabei das Netz bezeichnet werden, dessen Ausgabewerte die Ausgabe des Gesamtsystems bestimmen. Im Folgenden wird davon ausgegangen, dass immer nur genau ein Netz in einer Gruppe aus zwei oder mehr gekoppelten Netzen dominiert und damit die Ausgabe des dominierenden Netzes gleich der Ausgabe des Gesamtsystems ist. Andere Ausführungsformen sind jedoch auch grundsätzlich denkbar, so dass beispielsweise Vorschriften festgelegt sind, die bei mehr als einem dominierenden Netz eine Verarbeitung der Ausgabewerte der dominierenden Netze zu einem endgültigen Gesamtausgabewert beschreiben.

In beispielhaften Ausführungsformen kann zu diesem Zweck ein Timer bzw. Zeitglied implementiert werden, welches für eines oder mehrere der gekoppelten neuronalen Netze eine Zeitvorgabe festlegt. Dabei soll diese Zeitvorgabe bevorzugt als Maximalwert bzw. zeitliche Obergrenze verstanden werden, nach der ein Ausgabewert des jeweiligen Netzes vorliegen muss, so dass auch bereits früher eine Ausgabe vorliegen kann. Spätestens nach Ablauf der für ein bestimmtes Netz vorgegebenen Zeit wird dann ein Ausgabewert dieses Netzes ausgewertet. Der Timer kann auf Basis von festgelegten Zeitvorgaben damit die Dominanz zwischen den gekoppelten Netzen steuern und/oder verändern.

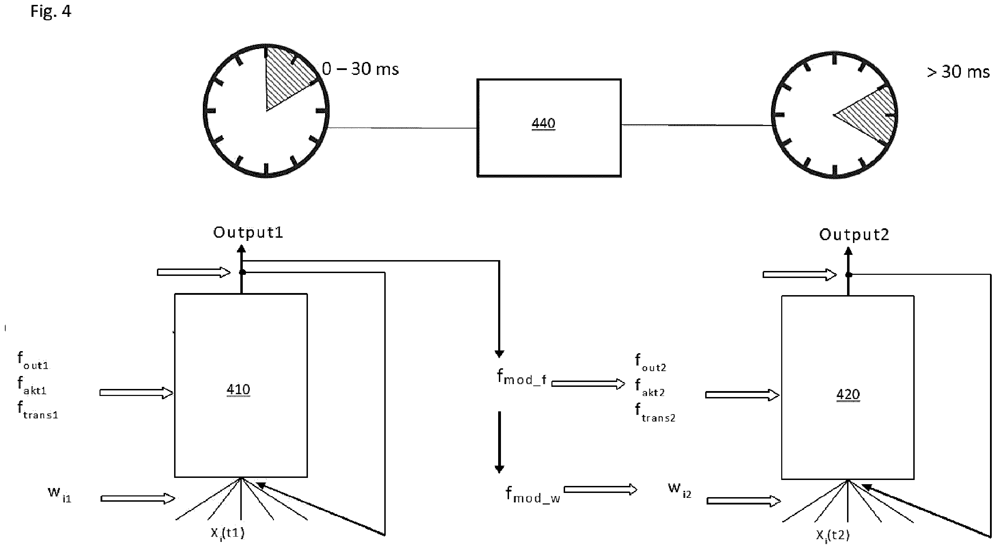

Eine beispielhafte Ausführungsform dieser Art ist in der Figur 4 dargestellt. Dabei kann die Ausbildung und Kopplung der beiden neuronalen Netze 410, 420 dem bereits in Figur 1 beschriebenen Beispiel entsprechen. Der Timer 440 sorgt nun dafür, dass die Ausgabe des ersten neuronalen Netzes 410 spätestens nach einer vorgegebenen Zeit, die durch einen vorgegebenen Zeitparameterwert festgelegt ist, ausgewertet wird. Die benötigte Zeit kann beispielsweise ab Einspeisung der Eingangswerte Xᵢ in das jeweilige Netz gemessen werden. Die Wahl der vorgegebenen Zeitparameter für ein Netz kann dabei insbesondere abhängig von der Komplexität eines Netzes durchgeführt werden, so dass in der vorgegebenen Zeit auch tatsächlich verwertbare Ergebnisse zu erwarten sind. In einem Beispiel wie dem zuvor beschriebenen, bei dem das erste neuronale Netz 410 bevorzugt durch ein Netz mit wenigen verborgenen Schichten und einer geringen Anzahl von Klassifizierungen gebildet wird, kann damit auch eine entsprechend kurze Zeit für dieses erste Netz gewählt werden. Ebenso können bei der Wahl der Zeitparameter für ein Netz weitere Überlegungen einbezogen werden, etwa die vorhandene Hardware, welche die Rechenzeit der Netze entscheidend beeinflusst, und/oder auch das von den gekoppelten Netzen betrachtete Einsatzgebiet. Weiter können die vorgegebenen Zeitparameter variabel sein und beispielsweise in Abhängigkeit von Ergebnissen von mindestens einem der gekoppelten neuronalen Netze abgeändert oder neu festgelegt werden. Es versteht sich, dass eine derartige Zeitvorgabe zumindest die Zeitspanne umfassen sollte, die als Mindestzeit für das einmalige Durchlaufen des jeweiligen Netzes 410, 420 erforderlich ist. In Figur 4 ist als Beispiel eine Zeitspanne von 30ms für das erste Netz festgelegt, so dass bei einem Verfahrensdurchlauf dieses Netz in der Zeit von 0ms bis 30ms ab Beginn des Verfahrens dominiert. Es kann aber natürlich auch ein geeigneter anderer Wert für diese Zeitspanne gewählt werden.

Während der durch den Zeitparameter für das erste Netz 410 vorgegebenen Zeitspanne (hier 30ms) wird das erste neuronale Netz die Eingabewerte Xᵢ auf übliche Weise verarbeiten. Nach Ablauf der vorgegebenen Zeit können aus der Ausgabe Output1 des ersten neuronalen Netzes 410 Funktionen erzeugt werden, die zur Überlagerung bzw. Modulation der eigenen Gewichte und Funktionen des zweiten neuronalen Netzes dienen. Außerdem können die Ausgabewerte des ersten neuronalen Netzes auch alternativ oder zusätzlich zur Verwendung für die Beeinflussung des zweiten Netzes 420 eigenständig verarbeitet werden und beispielsweise als schnelle Ausgabe des Gesamtsystems genutzt werden.

Sobald die Modulationsfunktionen f_{mod_f}, f_{mod_w} auf das zweite neuronale Netz 420 angewendet wurden, kann der Timer 440eine erneute Zeitmessung starten und dabei nun einen zweiten, für das zweite neuronale Netz 420 vorgegebenen Zeitparameter anwenden.

Dabei kann das zweite neuronale Netz 420 optional auch bereits vor der Modulation durch die gewonnenen Modulationsfunktionen f_{mod_f}, f_{mod_w} selbständig die Eingabewerte Xᵢ verwerten, so dass beispielsweise die Eingabewerte bereits vor Start der zweiten vorgegebenen Zeitspanne auch an das zweite neuronale Netz 420 gegeben werden können und dort entsprechend verarbeitet werden können. Nach Ablauf der ersten Zeitspanne wird dann die Überlagerung der Parameterwerte und Funktionen des zweiten neuronalen Netzes vorgenommen, indem die entsprechenden Modulationsfunktionen f_{mod_f}, f_{mod_w} angewendet werden. Dabei können ein oder mehrere Modulationsfunktionen für unterschiedliche Teile des zweiten neuronalen Netzes 420 gebildet werden, beispielsweise für die Gewichtungen, Ausgabefunktionen, Propagierungsfunktionen und/oder Aktivierungsfunktionen des zweiten neuronalen Netzes. Bei einem zweiten neuronalen Netz 420, das deutlich komplexer als das erste neuronale Netz 410 ausgebildet ist, beispielsweise durch deutlich mehr Schichten und Knoten und/oder durch eine höhere Anzahl von Speicherklassen, wird das zweite neuronale Netz einen im Vergleich höheren Rechenaufwand und damit auch mehr Zeit benötigen, so dass in diesem Fall die zweite Zeitspanne entsprechend länger gewählt werden kann.

Dabei kann optional jedes der Netze 410, 420 kontinuierlich weiter die Eingabewerte verarbeiten und auswerten, auch während ein anderes Netz aufgrund der laufenden Zeitspannen als dominierendes Netz im Gesamtsystem festgelegt ist. Insbesondere kann in dem gezeigten Beispiel aus zwei gekoppelten Netzen das erste Netz kontinuierlich die Eingabewerte auswerten, auch während die Dominanz beim zweiten Netz liegt und die Ausgabewerte des Gesamtsystems daher nach Ablauf der zweiten Zeitspanne und nach einer durch das zweite Netz gefundenen Lösung den Ausgabewerten des zweiten Netzes entsprechen. Auf diese Weise kann ein schnell kategorisierendes Netz wie das hier beschriebene erste Netz 410, das durchgängig die vorhandenen Eingabewerte auswertet, auch kurzfristige Eingriffe vornehmen, soweit die gefundenen Ausgabewerte Eingang in die Gesamtausgabe finden. Solche Ausführungsformen werden nachstehend noch genauer beschrieben.

Als Ergebnis einer derartigen Zeitsteuerung durch vorgegebene Zeitspannen in einem Timer kann das Gesamtsystem früh Entscheidungen treffen und beispielsweise schon handlungsfähig sein, ohne dass die endgültige Auswertung und detaillierte Analyse durch das zweite neuronale Netz schon abgeschlossen sein muss. Als Beispiel kann eine Situation in einem autonomen Fahrsystem betrachtet werden, die von einem derartigen System mit mindestens zwei gekoppelten Netzen bewertet werden soll. Durch die erste Einheit bzw. das erste neuronale Netz kann eine frühe Kategorisierung "Gefahr" erreicht werden, die noch keine weitergehende Einschätzung über die Art der Gefahr beinhaltet, aber bereits zu einer sofortigen Reaktion wie etwa einer Verlangsamung der Geschwindigkeit des Fahrzeugs und der Aktivierung der Brems- und Sensorsysteme führen kann. Gleichzeitig führt das zweite neuronale Netz auf Grundlage der Kategorisierung, nämlich unter Einfluss der Modulation durch die Ausgabewerte des ersten Netzes, eine tiefergehende Analyse der Situation durch, die dann zu weiteren Reaktionen oder Veränderungen des Gesamtsystems auf Grundlage der Ausgabewerte des zweiten Netzes führen kann.

Es ist auch denkbar, nicht für jedes der gekoppelten Netze eine Zeitbegrenzung vorzugeben, sondern nur für eines der Netze (bzw. bei Koppelung von mehr als zwei Netzen auch für nur eine Teilmenge der gekoppelten Netze). Beispielsweise könnte in dem oben genannten Beispiel ein Timer für das erste, schnell kategorisierende neuronale Netz eingesetzt werden, während das zweite Netz keine feste Zeitvorgabe erhält, oder umgekehrt. Eine derartige Ausführungsform kann auch mit weiteren Verfahren zur Bestimmung des momentan dominanten Netzes kombiniert werden, die nachstehend noch genauer beschrieben werden.

**In** allen Ausführungsformen mit eingesetztem Timer kann vorgesehen sein, dass als Ausgabe des Gesamtsystems jeweils die Ausgabewerte desjenigen neuronalen Netzes verwendet werden, welches momentan einen aktiven Timer aufweist. Aufgrund der Zeit, die ein Netz bis zum Erreichen einer ersten Lösung für vorgegebene Eingabewerte benötigt, ergibt sich dabei eine gewisse Latenzzeit, innerhalb derer noch die vorherigen Ausgabewerte (des ersten oder zweiten Netzes) als Gesamtausgabewerte vorliegen.

Falls nur für einen Teil der gekoppelten Netze Zeitvorgaben festgelegt sind, z.B. nur für ein erstes Netz ein Timer wirkt, kann beispielsweise definiert sein, dass die Ausgabe des Gesamtsystems im allgemeinen immer der Ausgabe des zweiten Netzes entspricht und nur dann durch die Ausgabe des ersten Netzes ersetzt wird, wenn für das erste Netz eine Timer aktiv ist, d.h. eine vorgegebene Zeitspanne aktiv läuft und noch nicht abgelaufen ist.

In einem System mit mehr als zwei Netzen kann durch Angleichung der vorgegebenen Zeitspannen und Wechsel des Timers auch eine sinnvolle Synchronisation der Netze untereinander ermöglicht werden, insbesondere wenn mehrere Netze mit unterschiedlichen Aufgaben gleichzeitig zu einem Ergebnis kommen sollen, das wiederum Einfluss auf ein oder mehrere andere Netze haben soll. Ebenso kann durch Anpassung der vorgegebenen Zeitspannen und Abläufe eine Synchronisation auch unter mehreren getrennten Gesamtsystemen, die jeweils mehrere gekoppelte Netze umfassen, erreicht werden. Dabei können die Systeme beispielsweise durch einen Zeitabgleich synchronisiert werden und dann selbständig, aber synchron gemäß der jeweiligen Timer-Vorgaben ablaufen.

Zusätzlich oder alternativ zur Änderung des jeweils dominierenden neuronalen Netzes im Gesamtsystem auf Grundlage eines Timers kann auch jedes der neuronalen Netze selbst auf kooperative Weise Entscheidungen zur Übergabe der Dominanz treffen. Dies kann beispielsweise bedeuten, dass ein erstes neuronales Netz eines Gesamtsystems die Eingabewerte verarbeitet und zu einer bestimmten ersten Lösung bzw. bestimmten Ausgabewerten kommt.

Wie auch bei der Schwerpunktveränderung mit Hilfe des Timers kann hier festgelegt sein, dass die Ausgabewerte des Gesamtnetzes jeweils den Ausgabewerten des aktuell dominierenden Netzes entsprechen.

Zu diesem Zweck können beispielsweise Veränderungen in den Eingangswerten bewertet werden. Solange die Eingangswerte im Wesentlichen unverändert bleiben, kann auch die Dominanzverteilung unter den gekoppelten Netzen im Wesentlichen unverändert bleiben, und/oder ausschließlich auf Grundlage eines Timers bestimmt werden. Falls jedoch die Eingangswerte sich plötzlich verändern, kann eine vorgegebene Dominanz festgelegt sein, welche das sonstige Dominanzverhalten der gekoppelten Netze überschreibt. So kann beispielsweise für plötzlich veränderte Eingangswerte bestimmt werden, dass die Dominanz in jedem Fall zunächst wieder auf die das erste neuronale Netz übergeht. Damit wird auch ein optional vorhandener Timer für dieses erste neuronale Netz erneut gestartet und der Ablauf wie zuvor bereits beschrieben durchgeführt. Eine deutliche Änderung der Eingangswerte könnte beispielsweise auftreten, wenn Sensorwerte eine neue Umgebung erfassen oder wenn ein zuvor bewerteter Prozess abgeschlossen wurde und nun ein neuer Prozess angestoßen werden soll.

Dabei können Schwellwerte in Form einer Signifikanzschwelle vorgegeben sein, anhand derer bestimmt werden kann, ob eine Änderung der Eingabewerte als wesentlich betrachtet werden soll und zu einer Änderung der Dominanz führen soll. Es können auch für unterschiedliche Eingabewerte bzw. für jeden Eingabewert einzelne Signifikanzschwellen vorgegeben sein, oder es kann ein allgemeiner Wert, z.B. in Form einer prozentualen Abweichung, als Grundlage für die Bewertung einer Veränderung der Eingabewerte vorgesehen sein. Ebenso könnten anstelle von festen Signifikanzschwellen zeitlich oder adaptiv und situationsabhängig veränderbare Schwellen vorliegen, oder es kann sich dabei um Funktionen, Matrizen oder Muster handeln, anhand derer die Signifikanz der Veränderung bewertet werden kann.

Alternativ oder zusätzlich kann die Veränderung der Dominanz unter den gekoppelten Netzen abhängig von den gefundenen Ausgabewerten jedes Netzes gemacht werden. Je nach Ausführungsform kann beispielsweise das erste neuronale Netz die Eingabewerte und/oder deren Veränderung bewerten. Dabei können für die Klassen, die für das erste neuronale Netz zur Klassifizierung vorliegen, jeweils Signifikanzschwellen vorgegeben sein, so dass bei einem Ergebnis des ersten neuronalen Netzes, das für die Eingabedaten einen signifikanten Wechsel der gefundenen Klasse ergibt, sofort eine Übergabe der Dominanz an das erste neuronale Netz stattfindet, so dass eine schnelle Neubewertung der Situation und gegebenenfalls eine Reaktion stattfinden kann. Auf diese Weise kann auch verhindert werden, dass trotz signifikant veränderter Eingabesituation, die durch das erste, schnell kategorisierende Netz erkannt wurde, unnötig lange weiter ohne Berücksichtigung der Veränderung vom zweiten neuronalen Netz in die Tiefe analysiert wird.

Die ersten Ausgabewerte der ersten künstlich lernenden Einheit und die zweiten Ausgabewerte der zweiten künstlich lernenden Einheit werden als direkte oder indirekte Steuersignale für Aktoren eines automatisierten Systems verwendet. Die Ausgabewerte können auch zunächst weiter durch zusätzliche Funktionen und Bewertungen weiterverarbeitet werden und/oder mit weiteren Daten und Werten kombiniert werden.

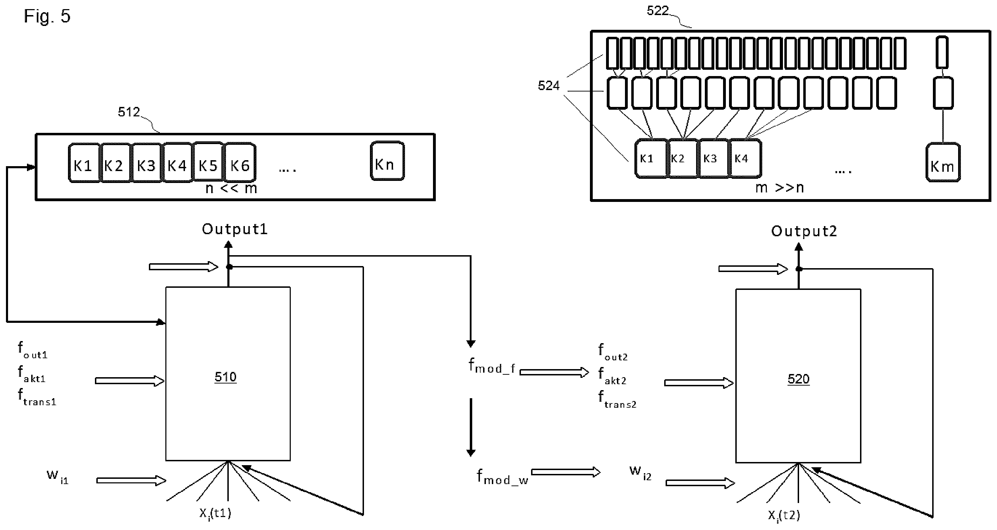

Figur 5 zeigt erneut das einfache Ausführungsbeispiel wie in Figur 1 mit zwei unidirektional gekoppelten Netzen 510, 520, wobei nun für jedes der Netze ein Klassifikationsspeicher 512, 522 schematisch gezeigt ist. Die Art der verwendeten Klassifikationen Kᵢ ist hier zunächst zweitrangig und wird nachstehend noch genauer beschrieben. Dabei können sich insbesondere die Dimension und der Aufbau der beiden Klassifikationsspeicher des ersten 512 und zweiten Netzes 522 deutlich unterscheiden, so dass zwei neuronale Netze mit unterschiedlichen Geschwindigkeiten und Schwerpunkten gebildet werden. Damit kann beispielsweise wie bereits kurz beschrieben ein Zusammenspiel aus einem schnellen, grob kategorisierenden und einem langsameren, aber detaillierter analysierenden Netz zu einem gekoppelten Gesamtsystem erreicht werden.

Im vorliegenden Beispiel wird ein erstes neuronales Netz 510 mit relativ wenigen Klassifikationen K₁, K₂, ...., Kₙ ausgebildet, die beispielsweise auch nur einer flachen Hierarchie folgen können, so dass nur in einer Dimension kategorisiert wird. Bevorzugt kann ein derartiges erstes Netz 510 auch in seiner Topologie vergleichsweise einfach ausgebildet sein, also mit einer nicht zu großen Anzahl n von Neuronen und verborgenen Schichten. Grundsätzlich kann die Netztopologie aber auch im Wesentlichen unabhängig von den Klassifizierungen sein.

Das zweite neuronale Netz 520 kann dann ein deutlich größeres und/oder komplexeres Klassifikationssystem aufweisen. Beispielsweise kann dieser Speicher 522 bzw. die zugrundeliegende Klassifikation auch hierarchisch in mehreren Ebenen 524 aufgebaut sein, wie in der Figur 5 gezeigt ist. Die Gesamtanzahl m der Klassen K1, K2, ...., Kₘ des zweiten Netzes 520 kann sehr groß sein, insbesondere deutlich größer als die Anzahl n der Klassen, die von dem ersten neuronalen Netz 510 verwendet werden. Beispielsweise könnte sich die Anzahl m, n der Klassen um ein oder mehrere Größenordnungen unterscheiden. Damit wird eine asymmetrische Verteilung der einzelnen Netze im Gesamtsystem erreicht.

Die schnelle Klassifizierung durch das erste neuronale Netz 510 kann dann dazu dienen, die Eingabewerte rasch einzuordnen. Dazu können bevorzugt abstrakte, zusammenfassende Klassen verwendet werden. Die Einordnung einer erfassten Situation (z.B. auf Grundlage von Sensordaten wie Bild- und Audiodaten) kann dann in einem Beispiel zunächst durch das erste neuronale Netz 510 als "großes, möglicherweise gefährliches Tier" erfolgen, ohne dazu weitere Auswertungen vorzunehmen. Dies bedeutet, dass z.B. keine weitere Klassifizierung nach Tierarten (Wolf, Hund) oder als gefährliches Raubtier in dem ersten Netz erfolgt, sondern nur nach möglichst breit gefassten, allgemeinen Merkmalen wie etwa der Größe, Erfassung von Zähnen, Angriffshaltungen und weiteren Eigenschaften klassifiziert wird. Diese Daten, die im Wesentlichen der Ausgabe "Gefahr" entsprechen, können dann optional bereits zur vorläufigen und schnellen Reaktion weiter an entsprechende externe Systeme gegeben werden, z.B. ein Warnsystem für einen Nutzer oder an bestimmte Aktoren eines automatisierten Systems. Außerdem wird die Ausgabe Output 1 des ersten neuronalen Netzes 510 zur Erzeugung der beschriebenen Modulationsfunktionen für das zweite neuronale Netz 520 genutzt.

Dieselben Eingabewerte Xᵢ, also z.B. die genannten Sensorwerte, werden auch an das zweite neuronale Netz 520 gegeben. Dabei können die Eingabewerte sofort, also im Wesentlichen gleichzeitig wie an das erste Netz, oder verzögert eingegeben werden, wobei sie je nach Ausführungsform bereits vor oder erst bei Anwendung der Modulationsfunktionen, d.h. bei Vorliegen des Ergebnisses des ersten Netzes eingegeben werden. Bevorzugt sollten sie insbesondere bei zeitkritischen Prozessen nicht später an das zweite neuronale Netz gegeben werden, um Verzögerungen zu vermeiden. Das zweite neuronale Netz berechnet dann ebenfalls eine Lösung, wobei die von diesem zweiten Netz ursprünglichen selbstgenerierten Gewichte und seine Basisfunktionen (wie die festgelegten Aktivierungsfunktionen und Ausgabefunktionen) jeweils auf Grundlage der Modulationsfunktionen überlagert werden können, die aus den Ausgabewerten des ersten Netzes gebildet wurden. Dadurch können bei der iterativen Arbeit des zweiten Netzes eine Vielzahl möglicher Varianten entfallen, für die bei einer von dem ersten Netz schnell erkannten kritischen Situation (z.B. einer Gefahrensituation) keine Zeit wäre. Während die langsamere Analyse des zweiten neuronalen Netzes stattfindet, können wie beschrieben bereits mögliche Reaktionen auf Basis des ersten neuronalen Netzes ausgeführt werden. Dies entspricht einer ersten instinktiven Reaktion in biologischen Systemen. Der hierarchische und gegenüber dem ersten Netz deutlich größere Speicher des zweiten Netzes erlaubt dann eine präzise Analyse der Eingabewerte, in dem genannten Beispiel eine detaillierte Einordnung in die Klasse "Hund", die jeweilige Rasse, Verhaltensmerkmale, die auf Gefahren oder eine harmlose Situation schließen lassen, und weitere. Bei Bedarf kann dann nach Erreichen eines Ergebnisses durch das zweite neuronale Netz die vorherige Reaktion des Gesamtsystems überschrieben werden, indem z.B. die erste Einordnung "Gefahr" wieder herabgestuft wird.

Insgesamt kann für ein derartig gekoppeltes Gesamtsystem mit asymmetrischer Klassifizierung beispielsweise vorgesehen sein, dass die Klassen Kₙ des schnell klassifizierenden ersten Netzes 510 vor allem abstrakte Einordnungen wie neue/bekannte Situation, gefährliches/ungefährliches Ereignis, interessantes/uninteressantes Merkmal, Entscheidung erforderlich/nicht erforderlich und ähnliche vornehmen, ohne dabei in die Tiefe zu gehen. Diese erste Klassifizierung muss dabei nicht zwingend dem Endergebnis entsprechen, das durch die zweite Einheit 520 letztendlich gefunden wird. Die zweistufige Klassifizierung durch mindestens eine schnelle und eine tief analysierende Einheit erlaubt aber damit gefühlsähnliche oder instinktive Reaktionen eines künstlich lernenden Gesamtsystems. Wenn beispielsweise ein Objekt durch Bilderkennung identifiziert wird, das möglicherweise eine Schlange sein könnte, kann bevorzugt der "worst case" das Ergebnis der ersten Klassifizierung sein, unabhängig davon, ob diese Einordnung wahrscheinlich richtig ist oder nicht. Was im Fall der menschlichen Intelligenz als evolutionäres Wissen und instinktive Reaktion vorliegt, kann durch eine schnelle erste Klassifizierung mit vorprogrammiertem Wissen ersetzt werden, so dass ebenfalls entsprechende Standardreaktionen (Abstand halten, Bewegung einleiten, erhöhte Aufmerksamkeit aktivieren) durch das Gesamtsystem und seine Aktoren durchgeführt werden können. Die zusätzliche Modulation der zweiten lernenden Einheit auf Basis dieser ersten Klassifizierung kann dann ähnlich wie eine gefühlsbedingte Überlagerung verstanden werden, d.h. beispielsweise entsprechend einer Angstreaktion, die automatisch eine andere bewusste Situationsanalyse einleitet als eine als harmlos verstandene Situation. Die Überlagerung der Parameter des zweiten neuronalen Netzes, die durch die Modulationsfunktionen vorgenommen wird, kann dabei die erforderliche Verschiebung in andere, ansonsten standardmäßig nicht oder nicht sofort erreichte Klassifikationsräume bewirken.

Entsprechend können derartige Systeme für eine Vielzahl von Anwendungsbereichen eingesetzt werden, beispielsweise in allen Anwendungen, in denen kritische Entscheidungssituationen auftreten. Beispiele sind Fahrsysteme, Rettungs- oder Warnsysteme für unterschiedliche Gefahrenarten, Chirurgiesysteme, und allgemein komplexe und nichtlineare Aufgabenstellungen.

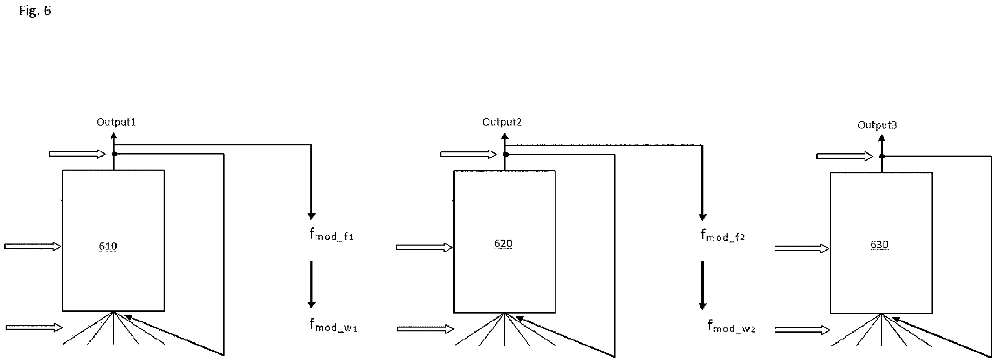

**In** den bisher beschriebenen Ausführungsformen wurden nur zwei künstlich lernende Einheiten miteinander gekoppelt. Diese Idee ist aber grundsätzlich auch auf mehr als zwei Einheiten anwendbar, so dass beispielsweise drei oder mehr künstlich lernende Einheiten auf entsprechende Art und Weise gekoppelt werden können, wobei festgelegt sein kann, welche der Einheiten die Parameter einer bestimmten anderen Einheit oder mehrerer anderer Einheiten modulieren kann. Figur 6 zeigt ein Beispiel, in dem drei neuronale Netze 610, 620, 630 (und/oder andere künstlich lernende Einheiten) vorgesehen sein können, wobei die Ausgabewerte des ersten Netzes 610 Modulationsfunktionen für die Gewichte und/oder Funktionen des zweiten Netzes 620 ergeben, und wobei wiederum Ausgabewerte des zweiten Netzes Modulationsfunktionen für die Gewichte und/oder Funktionen des dritten Netzes 630 ergeben. Auf diese Art und Weise könnten beliebig lange Ketten aus künstlich lernenden Einheiten gebildet werden, die sich gekoppelt durch Überlagerung beeinflussen.

Dabei können ähnlich wie im früheren Beispiel mit zwei neuronalen Netzen in einer Ausführungsform alle gekoppelten Netze dieselben Eingabewerte erhalten und die Verarbeitung nur durch die Modulation der jeweiligen Netze gekoppelt werden. Ebenso sind aber Ausführungsformen denkbar, in denen beispielsweise anschließend an zwei neuronale Netze wie in Figur 1 ein drittes neuronales Netz vorgesehen ist, welches die Ausgabewerte des ersten und/oder zweiten Netzes als Eingabewerte erhält. Optional könnten auch die Funktionen und/oder Gewichte dieses dritten neuronalen Netzes durch Modulationsfunktionen moduliert werden, die beispielsweise aus den Ausgabewerten des ersten Netzes gebildet werden. Dabei kann es sich um dieselben oder auch um andere Modulationsfunktionen als die für das zweite Netz gebildeten Modulationsfunktionen handeln. Alternativ könnten beispielsweise die Ausgabewerte des dritten Netzes verwendet werden, um zusätzliche Modulationsfunktionen zu bilden, die dann auf das erste und/oder zweite Netz rekursiv angewendet werden.

Es versteht sich, dass diverse weitere Kombinationen entsprechend gekoppelter lernender Einheiten möglich sind, bei denen zumindest zwei der verbundenen Einheiten eine Kopplung durch Bildung von Modulationsfunktionen für die beschreibenden Parameter der Einheiten, insbesondere für den Fall neuronaler Netze für die Gewichte und/oder Funktionen eines Netzes aufweisen. Mit zunehmender Anzahl der gekoppelten Einheiten sind dabei auch komplexere Variationen der Modulationen und Kopplungen denkbar.

Wie bereits anfangs angemerkt, wurden die hier beschriebenen Ausführungsformen zwar beispielhaft in Bezug auf neuronale Netze beschrieben, können aber grundsätzlich auch auf andere Formen des maschinellen Lernens übertragen werden. Dabei kommen alle Varianten in Betracht, bei denen eine Beeinflussung mindestens einer zweiten künstlich lernenden Einheit durch eine erste künstlich lernende Einheit durch Überlagerung bzw. Modulation auf Grundlage von Ausgabewerten möglich ist. Die Veränderung der Gewichte und Funktionen eines neuronalen Netzes durch Überlagerung mittels Modulationsfunktionen aus den vorstehenden Beispielen kann durch eine entsprechende Modulierung jedes geeigneten Parameters, der die Funktionsweise einer derartigen lernenden Einheit steuert bzw. beschreibt, ersetzt werden. In den Beispielen kann jeweils der Begriff "lernende Einheit" durch den Spezialfall eines neuronalen Netzes ersetzt werden, und umgekehrt können die beschriebenen neuronalen Netze der beispielhaften Ausführungsformen auch jeweils verallgemeinert in Form einer künstlich lernenden Einheit implementiert werden, auch wenn es im jeweiligen Beispiel nicht explizit angeführt ist.

Als Beispiele sind neben neuronalen Netzen unter anderem Evolutionäre Algorithmen, Support Vector Machines (SVM), Entscheidungsbäume sowie jeweilige Spezialformen wie Random Forests oder Genetische Algorithmen bekannt.

Ebenso können neuronale Netze und andere künstlich lernende Einheiten miteinander kombiniert werden. Dabei ist es insbesondere möglich, z.B. das erste neuronale Netz aus den vorstehenden Beispielen, das als schnell kategorisierende Einheit dargestellt wurde, durch eine beliebige andere künstlich lernende Einheit zu ersetzen. Dabei kann auch gezielt eine Methode gewählt werden, die sich für eine schnelle, grobe Klassifizierung von Merkmalen besonders gut eignet. Die Ausgabewerte einer solchen ersten lernenden Einheit können dann aber ebenso, wie es für zwei neuronale Netze beschrieben wurde, zur Bildung von Modulationsfunktionen für eine zweite künstlich lernende Einheit angewendet werden, die insbesondere wieder ein neuronales Netz sein kann.

Zusätzlich oder alternativ zu den beschriebenen Varianten kann ein System aus zwei oder mehr künstlich lernenden Einheiten weiter verbessert werden, indem mindestens eine künstlich lernende Einheit beispielsweise zur Bewertung bzw. Validierung von Ergebnissen einer anderen künstlich lernenden Einheit herangezogen wird oder weitere Aufgaben erfüllt, die im folgenden dargestellt werden. Dies kann beispielsweise grundsätzlich durch ein System mit zwei künstlich lernenden Einheiten ausgebildet sein, von denen eine die Ergebnisse des anderen nachträglich bewertet und optional beeinflusst, z.B. durch Festlegung der Gesamtausgabe des Systems. Es sind aber auch komplexere Varianten ebenso möglich, beispielsweise ein System aus drei künstlich lernenden Einheiten, von denen zwei Einheiten wie zuvor beschrieben miteinander modulierend gekoppelt sind und eine dritte Einheit nun als validierende Einheit hinzugefügt wird.

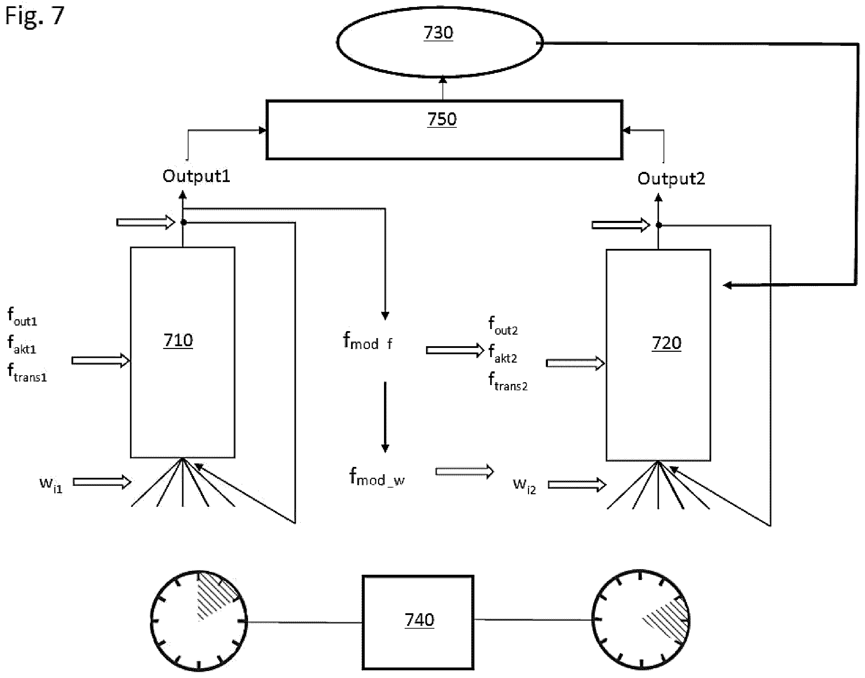

Dabei kann erneut als beispielhafte Ausführungsform ein System mit einem ersten 710 und einem zweiten neuronalen Netz 720 betrachtet werden, wie in Verbindung mit Figur 1 oder 5 beschrieben, dem ein drittes neuronales Netz 730 hinzugefügt wird. Dieses dritte Netz 730 bzw. allgemein die dritte künstlich lernende Einheit kann ebenfalls einen eigenen Klassifikationsspeicher aufweisen. Ein so erweitertes System ist in Figur 7 dargestellt. Außerdem kann nun eine Projektionsebene 750 vorhanden sein. Die Projektionsebene 750 kann als Software- und/oder Hardware-Einheit oder als Kombination mehrerer solcher Einheiten ausgeführt sein. Dabei kann die Projektionsebene insbesondere einen Verbund aus mehreren Einheiten bilden, in denen auch die künstlich lernenden Einheiten und ihre Speicherelemente enthalten sein können. Die Projektionsebene 750 kann dabei eine Zentraleinheit bilden, in der die Ausgaben mindestens der zweiten Einheit (und optional weiterer Einheiten) verarbeitet und verknüpft werden, z.B. eine Multiplexereinheit, eine Einheit, die Sequenzen aus Daten erzeugt, eine Einheit, die nach einer positiven oder negativen Bewertung den gespeicherten Daten oder Sequenzen eine Kennung bzw. ein Label aufprägt, das beim Vergleich neuer Daten mit gespeicherten Daten beispielsweise Entscheidungen abkürzen kann. Diese Funktionen können auch ganz oder teilweise durch Programmmodule erfüllt werden. Die Projektionsebene kann außerdem auch Eingabe- und/oder Ausgabeeinheiten umfassen, wie etwa einen Bildschirm oder eine akustische Einheit, wodurch ermöglicht wird, mit einem Nutzer oder einem Anwender, der z.B. eine Trainingsphase des Systems unterstützt, zu kommunizieren und etwa den derzeitigen Bearbeitungsstand einzuschätzen.

Der Projektionsebene 750 kann ein Speicherelement als Projektionsspeicher zugeordnet sein, in dem Daten aus der Projektionsebene zumindest vorübergehend abgespeichert werden können. Die Speicherdauer für diese Daten kann beispielsweise allgemein festgelegt sein, kann aber auch von einer der Einheiten festgelegt werden, etwa von der dritten, validierenden Einheit. Je nach Ausführungsform kann der Speicher der Projektionsebene im wesentlichen als Kurzzeitspeicher dienen, dessen Inhalte nach Bedarf überprüft, gelöscht, überschrieben und/oder in andere Speicher, etwa in die Speicherelemente der jeweiligen neuronalen Netze bzw. Einheiten übertragen werden können. Damit kann der Projektionsspeicher beispielsweise als Ringspeicher ausgeführt werden, in dem jeweils nach einer bestimmten Anzahl von Einträgen oder einer bestimmten Datenmenge der Speicher "voll" ist und daher die vorherigen Daten von vorne überschrieben werden, was einer Ringstruktur entspricht.

Das dritte neuronale Netz (Agent) 730, das hier als validierende Einheit ausgeführt wird, bewertet nun Daten, die in der Projektionsebene 750 vorliegen. Dies können beispielsweise Eingabedaten, Ausgabedaten von einem der beiden anderen Netze 710, 720, und/oder weitere Daten sein. Es könnten beispielsweise auch nur Ausgabedaten, optional mit zusätzlichen Informationen, in der Projektionsebene 750 verarbeitet werden. Weiterhin ist es möglich, dass die Daten vor der Projektionsebene auf gewisse Weise verarbeitet oder z.B. vereinfacht werden. In Reaktion auf die Verarbeitung der Daten durch die dritte Einheit 730, die einer Klassifizierung oder Bewertung entsprechen kann, können verschiedene Aktionen durchgeführt werden, die Einfluss auf die endgültigen Ausgabewerte des Gesamtsystems und die damit verbundenen Signale an Aktoren, Ausgabeschnittstellen und anderes haben, und/oder Aktionen, die das weitere Verhalten des Gesamtsystems und insbesondere der übrigen Einheiten, die im System enthalten sind, beeinflussen. Diese Aktionen werden im Folgenden noch näher beschrieben.

Dabei können die Daten in der Projektionsebene 750 auch miteinander verknüpft werden, so dass sich mindestens eine weitere Information ergibt. Beispielsweise kann über eine entsprechende Zuordnung oder einen Unterparameter angegeben sein, dass ein bestimmter Ausgabewert des zweiten Netzes 720 aus einem bestimmten, ebenfalls in der Projektionsebene 750 vorhandenen Eingabewert entstanden ist und diese beiden Werte daher miteinander verknüpft sind. Weiter können zeitliche Parameter vorliegen, die beispielsweise angeben, zu welcher Zeit ein bestimmter Ausgabewert ausgegeben wurde. Dabei könnten solche zeitlichen Parameter eine absolute Zeitangabe umfassen, aber auch eine relative Zeitangabe abhängig von dem derzeitigen Bewertungszeitpunkt oder einem anderen Referenzzeitpunkt. Ebenso könnte kein fester Zeitpunkt, sondern ein zeitlicher Abschnitt angegeben sein, dem ein oder mehrere Eingabe- und/oder Ausgabewerte der Netze zugeordnet werden. Zusätzlich oder alternativ zu einem tatsächlichen zeitlichen Parameters kann eine Reihenfolge mit zumindest einem Teil der Daten verknüpft sein, so dass auch ohne explizite Zeitangabe in der Projektionsebene erkennbar ist, in welcher Reihenfolge mehrere vorliegende Datenwerte erzeugt oder verarbeitet wurden, z.B. in Form einer zugeordneten Nummerierung für die Ausgabewerte in der Projektionsebene.

Auf diese Weise können die in der Projektionsebene 750 vorliegenden Daten, z.B. Eingabe- und Ausgabewerte, beispielsweise zeitliche Sequenzen bilden. Optional können solche Sequenzen auch markiert werden, so dass beispielsweise festgelegt ist, dass ein bestimmter Zeitabschnitt oder festgelegte Ausgabewerte zu einer definierten Sequenz gehören. Zur weiteren Verarbeitung, Speicherung oder Bewertung können dann derartig gebildete Sequenzen als ganzes behandelt werden. Alternativ können dann auch unterschiedliche Ein- und Ausgabewerte, die zu demselben Zeitabschnitt oder zu derselben Sequenz gehören, gemeinsam verarbeitet werden, beispielsweise miteinander verglichen werden. Durch eine zeitliche Einordnung der Daten in der Projektionsebene sowie die Gruppierung in bestimmte Abläufe und Sequenzen, auf die wieder zugegriffen werden kann, kann ein erinnerungsähnliches Konstrukt ermöglicht werden. In Figur 7 ist außerdem auch wieder ein Timer 740 dargestellt, der entsprechend der in Verbindung mit Figur 4 beschriebenen Idee auch in diesem System eingesetzt werden kann, um die Dominanz zwischen den Einheiten 710, 720 zu steuern.

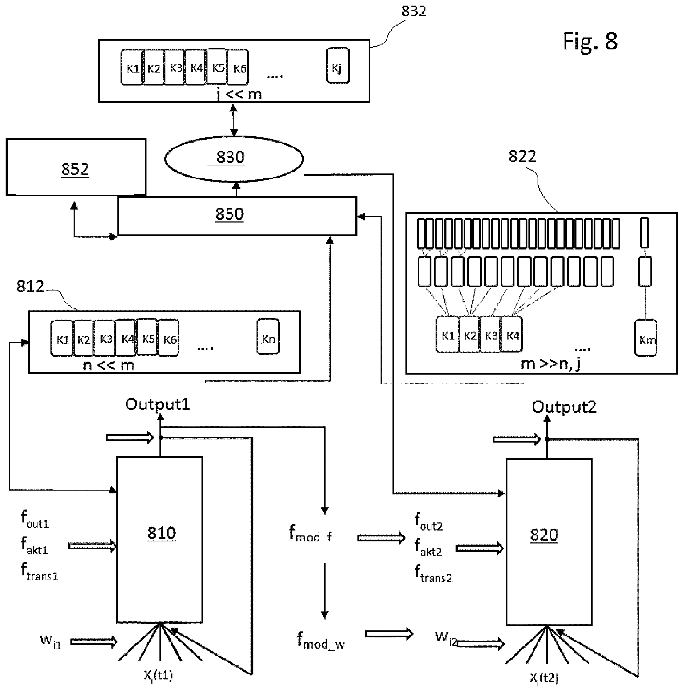

Figur 8 zeigt erneut das System aus Figur 7, in dem nun auch die Speicherelemente aller Systemelemente dargestellt sind. Dabei kann dem dritten neuronalen Netz 830 ebenfalls ein Klassifikationsspeicher 832 zugeordnet sein, der wie hier dargestellt mit vergleichsweise wenigen Ebenen und Klassen Kj ausgestaltet sein kann. Grundsätzlich ist aber eine komplexere Ausführung ebenfalls möglich. Im vorliegenden Beispiel wird davon ausgegangen, dass die Anzahl Kj der Ebenen und/oder Klassen für das dritte neuronale Netz 830 deutlich geringer ist als für das zweite neuronale Netz 820, das als analysierende Einheit vorgesehen ist, also beispielsweise um eine oder mehrere Größenordnungen kleiner. In der schematischen Zeichnung ist der Speicher 812 des ersten, kategorisierenden Netzes 810 ähnlich komplex ausgeführt wie der Speicher 832 des dritten, validierenden Netzes 830; dies ist jedoch nicht notwendig vorgegeben. Die Speicher können sich auch weiter unterscheiden. In einer Variante, in der den drei Netzen 810, 820, 830 die Aufgaben wie zuvor beschrieben zugedacht sind, wird aber üblicherweise eine deutliche Asymmetrie zwischen den Speichergrößen und -komplexitäten vorherrschen, wobei das zweite Netz 820, das als analysierendes Netz ausgelegt ist, einen wesentlich größeren und komplexeren Klassifikationsspeicher 822 aufweist.

Auch für die Projektionsebene 850 ist ein Speicher 852 vorgesehen, der beispielsweise als flüchtiges Speicherelement oder als nicht-flüchtiges Speicherelement in Form eines Ringspeichers oder eines anderen Kurzzeitspeichers ausgestaltet sein kann, wie bereits in Zusammenhang mit Figur 7 angesprochen wurde. Die in der Projektionsebene 850 zu verarbeitenden Daten werden in diesem Projektionsspeicher 852 abgelegt. Die Speicherdauer der Daten und die Wahl der zu speichernden Daten kann sehr unterschiedlich ausgestaltet sein. Beispielsweise kann zunächst eine feste Speicherdauer vorgegeben werden. Nach Ablauf dieser Zeit können die Daten im Projektionsspeicher 852 verworfen und/oder überschrieben werden. Zusätzlich oder alternativ kann ein Teil des Systems, beispielsweise das dritte neuronale Netz 830, Entscheidungen darüber treffen, ob die Daten im Projektionsspeicher 852 zumindest teilweise an ein anderes Element des Systems weitergegeben werden. Um einen Datenverlust zu verhindern, kann diese Entscheidung getroffen werden, bevor die vorgegebene Speicherdauer abgelaufen ist. Beispielsweise kann das dritte neuronale Netz 830 entscheiden, dass ein Teil oder alle der in der Projektionsebene 850 bzw. 852 abgelegten Daten an ein anderes Speicherelement zur Langzeitspeicherung übergeben werden sollen. Dies kann beispielsweise auch eines der Speicherelemente 812, 822 der neuronalen Netze sein, insbesondere der Speicher 822 des zweiten neuronalen Netzes 820, das als analysierende Einheit den wesentlichen Teil der Ergebnisfindung übernehmen kann. Durch die Speicherung in einem Speicher der anderen Einheiten im System, die später neue Situationen bewerten, können damit bereits bewertete Situationen ähnlich wie gemachte Erfahrungen einfließen. Grundsätzlich könnte aber auch ein eigenes Speichermodul (nicht gezeigt) als Langzeitspeicher vorgesehen sein, bei dem fest vorbestimmt oder von einer der Einheiten definierbar sein kann, welche Einheit in welchem Umfang auf die dort gespeicherten Daten zugreifen kann. Beispielsweise könnte dabei festgelegt sein, dass nur die zweite Einheit 820 (und bei größeren Systemen z.B. weitere detailliert analysierende Einheiten) auf den Langzeitspeicher zugreifen, und/oder dass die bewertende dritte Einheit 830 die Zugriffe regelt.

Die in der Projektionsebene 850 vorliegenden Daten können einem Abbild einer vorliegenden Situation entsprechen, z.B. durch Kombination von Eingabewerten, wie akustischen Daten, Bilddaten, Sensordaten und Texten, die dann durch Verknüpfung mit den Ausgabewerten der verschiedenen Einheiten zu einem interpretierten Abbild der Situation werden.

Die Ausgabewerte von mindestens einem der anderen Netze 810, 820 können nun der Projektionsebene 850 zugeführt werden, wie in der Zeichnung durch die Pfeile dargestellt ist. Die optionale Einbeziehung der Eingabewerte ist hier nicht dargestellt. Das dritte neuronale Netz 830 erhält die Daten der Projektionsebene 850 als Eingabewerte und bildet daraus dritte Ausgabewerte. Dabei können alle oder nur ein definierter Teil der Daten, die in der Projektionsebene 850 bzw. im Projektionsspeicher 852 vorliegen, als Eingabewerte für das dritte Netz 830 verwendet werden. Auf Basis der erhaltenen Lösungen bzw. Ausgabewerte kann das dritte Netz 830 dann verschiedene weitere Handlungen auslösen. Beispielsweise kann auf Grundlage der dritten Ausgabewerte entschieden werden, ob die Ausgabewerte des ersten 810 und/oder zweiten Netzes 820 innerhalb gültiger Bereiche oder Parameter liegen, d.h. ob sie als gültige Lösung zulässig sind. Falls hier festgestellt wird, dass beispielsweise die aktuellen Ausgabewerte des ersten und/oder zweiten Netzes, die in den vorherigen Beispielen als Gesamtausgabewert des Systems festgelegt wurden, außerhalb zulässiger Bereiche liegen, kann eine Reaktion des Gesamtsystems auf Grundlage dieser Bewertung verhindert bzw. gestoppt werden, so dass die zuvor gewonnenen ersten/zweiten Ausgabewerte des ersten/zweiten Netzes beispielsweise nicht an Aktoren oder Schnittstellen weitergegeben werden. Die als unzulässig oder ungültig bewerteten Ausgabewerte können dann verworfen werden, können aber alternativ auch zusammen mit dieser Bewertung abgespeichert werden, um in späteren Situationen beispielsweise durch Vergleich darauf zurückgreifen zu können. Damit können Bewertungen später erfasster Situationen vereinfacht oder beschleunigt werden, indem die bereits als unzulässig erkannten Lösungen nicht weiter verfolgt werden.

Umgekehrt können Ausgabewerte und Lösungen nicht nur auf Zulässigkeit überprüft werden, sondern auch, ob sie bestimmten Bedingungen bzw. Vorgaben besonders gut entsprechen, also eine möglichst ideale Lösung darstellen. Die so gefundenen Ausgabewerte können dann bevorzugt als Ausgabe des Gesamtsystems verwendet werden, oder können beispielsweise in einem Langzeitspeicher abgelegt werden, um zukünftig schnell als beste gefundene Lösung abgerufen werden zu können. Ebenso könnten Ausgabewerte, die als besonders nachteilig oder vorteilig bewertet wurden, mit einem entsprechenden Bewertungsparameter versehen werden, der ebenfalls verknüpft mit diesen Werten abgespeichert und/oder weiter übertragen werden kann. Diese Bewertungsmöglichkeiten können einzeln oder in Kombination miteinander umgesetzt werden.

Die Entscheidung über die Übergabe und Speicherung von Daten aus der Projektionsebene 850, die bereits zuvor beschrieben wurde, kann beispielsweise auf Grundlage solcher Bewertungen durch die dritte Einheit 830 getroffen werden.

In einer weiteren Ausführungsform ist es auch möglich, dass zunächst nur die Eingabewerte des Systems, die als Eingabewerte der ersten und zweiten Einheit verwendet werden, in der Projektionsebene bzw. ihrem zugeordneten Speicher 852 abgelegt werden. Dies kann als unverarbeitetes Abbild einer aktuellen Situation betrachtet werden. Gleichzeitig beginnen die erste und die zweite Einheit mit der Verarbeitung dieser Eingabewerte wie bereits zuvor beschrieben, also unter Verwendung verschiedener Möglichkeiten wie z.B. dem Wechsel der Dominanz zwischen den Einheiten und der Modulation der bestimmenden Parameter und Funktionen der zweiten Einheit.

Die gefundenen Lösungen, also die Ausgabewerte des ersten und/oder des zweiten Netzes, können dann in die Projektionsebene übernommen werden, wobei sie entweder die jeweiligen zugehörigen Eingabewerte überschreiben können oder auch mit diesen gemeinsam abgespeichert und verknüpft werden können. Je nach Variante kann beispielsweise jedes neuere Ergebnis, das aus denselben Eingabewerten gewonnen wurde, ein älteres Ergebnis überschreiben. In anderen Fällen können die Ergebnisse unter Beibehaltung älterer Lösungen in die Projektionsebene übernommen werden, so dass beispielsweise durch einen Vergleich von aktuellen und vorherigen Lösungen auch bewertet werden kann, ob ein späteres oder früheres Ergebnis besser den Vorgaben und Randbedingungen der dritten Einheit entspricht. Als Beispiel für eine Verknüpfung kommen dabei insbesondere gleichzeitig überlagerte Elemente oder auch eingeblendete Elemente in Frage, soweit es sich z.B. um Bilder handelt.

Optional kann dabei auch die bereits zuvor beschriebene Dominanz zwischen den gekoppelten Einheiten beachtet werden, so dass beispielsweise nur die Ausgabewerte des derzeit dominanten Netzes in der Projektionsebene bzw. deren Speicher abgelegt werden. Dabei können auch erneut zeitliche Parameter mit den Werten verknüpft werden. Beispielsweise können Zeitabschnitte mit gleicher oder unterschiedlicher Länge definiert werden, denen dann die jeweiligen Eingabewerte und Ausgabewerte passend zugeordnet werden, um einen zeitlichen Ablauf einer Situation wiederzugeben. So könnten beispielsweise in einem ersten Zeitabschnitt die Eingabewerte gespeichert werden, während in einem nächsten Zeitabschnitt Ausgabewerte der ersten kategorisierenden Einheit abgespeichert werden und anschließend Ausgabewerte der zweiten Einheit. Weitere, verbesserte oder zumindest veränderte Ausgabewerte können dann in weiteren Abschnitten abgespeichert werden. Für jeden Block von Ausgabewerten kann dabei ein Zeitabschnitt vorgegeben sein, die optional aber als zusammengehörig gekennzeichnet sein können, um den Ablauf einer erkannten Situation zu verdeutlichen.

In beispielhaften Ausführungsformen kann die Kontrolle über die Speicherung von Daten in oder aus dem Projektionsspeicher auch von mehreren Einheiten des Systems zumindest teilweise übernommen. Beispielsweise wurde bereits eine Situation beschrieben, in der bei einem System mit definierter Dominanz der Einheiten geprüft wird, ob sich die Eingabewerte über ein vorgegebenes Maß ändern, so dass eine neue Situation angenommen wird. In diesem Fall kann die Dominanz auf die erste, kategorisierende Einheit übergehen, um eine neue grobe Einordnung der Eingabewerte zu erstellen. Gleichzeitig kann dann die erste Einheit ein Signal an den Projektionsspeicher geben, das anzeigt, ob die dort abgelegten Daten (die einer vorherigen Situation entsprechen) an ein anderes Speicherelement, z.B. den Langzeitspeicher, übergeben werden sollen oder ob sie später überschrieben werden können. Ebenso könnten die erste und/oder die zweite Einheit abhängig von einem derzeitigen Verarbeitungsprozess die Speicherdauer in dem Projektionsspeicher anpassen, um auf verschiedene Situationen oder Ziele reagieren zu können. Beispielsweise kann eine längere Speicherdauer in der Projektionsebene festgelegt werden, wenn eine lange, tiefgehende Lösungssuche erforderlich ist, während rasche Entscheidungen zu schnellen Änderungen der gespeicherten Daten führen können.

Optional ist auch möglich, dass eine der Einheiten vorrangig über z.B. die Speicherdauer entscheiden kann, so dass beispielsweise eine Entscheidung der ersten Einheit, vorherige Daten im Projektionsspeicher zu verwerfen, von der zweiten Einheit überprüft oder blockiert werden kann, so dass die jeweiligen Daten trotzdem gespeichert werden, z.B. bei immer wiederkehrenden Eingabewerten. Außerdem ist auch denkbar, dass zumindest in begrenztem Umfang eine der Einheiten Änderungen am Klassifikationsspeicher einer anderen Einheit vornehmen kann und beispielsweise neue Kategorien anlegen kann. Dabei können aber auch geschützte Bereiche definiert sein, in denen alle Vorgaben gespeichert sind, die von keiner Einheit abgeändert oder gelöscht werden dürfen.

Falls wie in dem System aus Figur 4 oder Figur 7 ein Timer vorgegeben ist, der in der Lage ist, Zeitintervalle zu messen und diese Information an Einheiten weiter zugeben, kann dieser beispielsweise auch eine Überwachung der vorgegebenen Speicherdauer übernehmen. Damit können die Speicherzeiten auch mit den Dominanzverteilungen zwischen den unterschiedlichen Einheiten eines Systems abgestimmt oder synchronisiert werden. Alternativ kann dazu aber auch ein anderer Teil des Systems vorgesehen sein. Grundsätzlich kann das dritte Netz bzw. die dritte lernende Einheit auch die vorgegebene Speicherdauer verändern und neu festsetzen. Dabei können auch für unterschiedliche Werte unterschiedliche Vorgaben für die Speicherdauer definiert werden. Beispielsweise kann festgelegt werden, dass die Ausgabewerte der ersten, schnell kategorisierenden Einheit nur für kurze Zeit in der Projektionsebene abgelegt werden, so dass dafür eine erste Zeitvorgabe für die Speicherdauer festgelegt wird, während die Ausgabewerte der zweiten Einheit mit einer längeren Zeitvorgabe für die Speicherdauer versehen werden. Es ist auch möglich, dass die Ausgabewerte der ersten Einheit nur so lange gespeichert werden, bis Ausgabewerte der zweiten Einheit vorliegen. Optional könnte dabei auch zunächst eine Prüfung der Ausgabewerte durch die dritte Einheit abgewartet werden. Falls dabei festgestellt wird, dass die Ausgabewerte der zweiten Einheit nicht gültig sind, weil sie nicht den vorgegebenen Randbedingungen entsprechen, kann die Speicherung dieser Werte abgebrochen werden, während die groben Ausgabewerte der ersten Einheit weiter behalten werden.

Zusätzlich oder alternativ kann die dritte künstlich lernende Einheit auf Grundlage ihrer erfolgten Bewertung auch die Modulation, die zwischen der ersten und der zweiten Einheit ausführlich beschrieben wurde, weiter verändern oder eigene Modulationsfunktionen bilden, die auf die Parameter und Funktionen des zweiten Netzes angewendet werden können. Damit können auf die zweite Einheit, d.h. das zweite Netz im Ausführungsbeispiel, Modulationsfunktionen sowohl von der ersten als auch der dritten künstlich lernenden Einheit angewendet werden, die damit deren Ausgabewerte erneut beeinflussen. Auf ähnliche Weise kann eine dritte Einheit auf Basis der erfolgten Bewertung der Ausgabewerte auch beispielsweise eine Dropoutrate, wie sie bereits für die Knoten eines zweiten neuronalen Netzes beschrieben wurde, neu festlegen oder abändern, um Einfluss auf die Verarbeitung zu nehmen. Damit kann beispielsweise auch die Verarbeitungsgeschwindigkeit erhöht werden, wenn das Finden einer Lösung ohne Dropout zulange dauern würde. Alle diese Möglichkeiten können parallel und ergänzend zur Kopplung und Modulation zwischen den ersten beiden Einheiten stattfinden.

Das System kann dabei so ausgestaltet sein, dass die dritte Einheit nicht alleine über die Gültigkeit oder Ungültigkeit von Ergebnissen und Ausgabewerten entscheidet, sondern in Kombination mit den anderen Einheiten des Systems, indem beispielsweise die Verarbeitungsparameter, Speicherzeiten und andere Elemente beeinflusst werden.

Soweit das dritte neuronale Netz als bewertende oder validierende Einheit ausgelegt ist, kann dieses beispielsweise Klassifizierungen umfassen, die im wesentlichen Merkmale wie Verbote, Prioritäten und werteähnliche Vorgaben beinhalten. Indem eine derartige dritte Einheit die Ausgabewerte der anderen Einheiten auswertet, kann sichergestellt werden, dass nur solche Lösungen für das Gesamtsystem zugelassen werden, die diesen Vorgaben entsprechen. Dies könnten einfache festgelegte Randbedingungen eines Systems sein; sie könnten aber auch weiterentwickelt werden zu einem ethikähnlichen Modul, das die Entwicklung und Entscheidungen des Gesamtsystems in einer durch Werte und Regeln vorgegebenen Richtung hält. Diese Randbedingungen, die unter anderem durch die Klassifikationen im dritten Netz vorgegeben sind, können daher bevorzugt fest definiert und abgespeichert sein, ohne durch das System veränderbar zu sein. In anderen Ausführungsformen ist aber auch denkbar, dass ein System diese Klassifikationen zumindest zum Teil selbst erlernt, also entsprechend einem nicht-überwachten Lernen, so dass sich wenigstens teilweise ein eigenes Wertesystem bzw. eine erlernte Menge von Randbedingungen herausbildet. Es können auch Ausführungsformen verwendet werden, in dem ein Grundsystem von nicht veränderbaren Randbedingungen vorgegeben ist, das dann im Verlauf einer Trainingsphase oder im laufenden Betrieb und/oder durch Dateneingabe von außen ergänzt werden kann.

Die Randbedingungen, die durch die dritte Einheit vorgegeben sind, können dabei sowohl in einer gemeinsamen Trainingsphase der gekoppelten Netze angewendet werden als auch in der späteren Auswertungsphase eines bereits trainierten Systems. Optional könnten im Klassifikationsspeicher der dritten Einheit mehrere separate Voreinstellungen vorgesehen sein, die mehreren abgeschlossenen Gruppen von Klassifikationen entsprechen. Bei Bedarf kann dann eine dieser Gruppen ausgewählt werden, beispielsweise abhängig von der vorliegenden Situation. Die Erkennung der jeweils vorliegenden Situation und die Zuordnung der anzuwendenden Klassifikationsgruppen können wieder auf den Ergebnissen der ersten und/oder zweiten Einheit basieren. Auf diese Weise könnten beispielsweise unterschiedliche Risikobereitschaften oder "Grundstimmungen" eines Systems implementiert werden. Dabei kann auch eine Grundeinstellung vordefiniert sein, die nur in bestimmten Fällen abgeändert wird. Ebenso ist denkbar, dass aus der unveränderbaren Grundeinstellung der dritten Einheit in Trainings- und Betriebsphasen des gekoppelten Systems aktiv neue Klassifikationsgruppen mit zusätzlichen oder flexiblen Randbedingungen für die dritte Einheit gebildet werden.

Als Beispiel kann bei einem autonomen Fahrzeug oder Flugzeug, das zur Rettung von Menschen eingesetzt wird (z.B. eine Flugdrohne), ein riskanterer Fahrstil zugelassen werden, solange keine Passagiere befördert werden, insbesondere dann, wenn das Fahrzeug schnell an einem vorgegebenen Ort eintreffen soll. Nach einer groben Erkennung der Situation, z.B. "Alarmsituation", die beispielsweise durch die erste Einheit vorgenommen werden kann, kann also für die dritte Einheit eine entsprechende Klassifikationsgruppe ausgewählt werden, anhand derer dann die Lösungen bzw. Ausgabewerte aller Einheiten bewertet werden. Damit können grundlegende Randbedingungen weiter eingehalten werden, z.B. das Vermeiden von Unfällen, aber gleichzeitig andere Randbedingungen gelockert werden (wie etwa schnelle Kurvenfahrten, Akzeptieren von Beschädigungen, oder andere). Sobald das System eine neue Situation erkennt, beispielsweise das Vorhandensein von Passagieren im Fahrzeug, kann eine andere Klassifikationsgruppe für die dritte Einheit angewendet werden, die nun stärker auf das Wohlbefinden der Passagiere oder auch geretteten Verunglückten ausgerichtet sein kann. In einer erweiterten Ausführungsform könnten dann auch weitere Kriterienkataloge angelegt werden, die in spezifischen Situationen zur Klassifizierung genutzt werden können, beispielsweise für Lastentransporte, bei der Brandbekämpfung, bei einem Erkundungsflug bzw. einer Erkundungsfahrt, und weitere. Falls Situationen als solche bekannten Situationen eingeordnet werden können, kann die dritte Einheit dann darauf beschränkt bleiben, die Gültigkeit der Randbedingungen einzuhalten und, solange keine Widersprüche auftreten, passiv bleiben. Falls jedoch kompliziertere oder unbekannte Situationen auftreten, die möglicherweise Schäden oder andere unerwünschte Folgen nach sich ziehen, kann die dritte Einheit auch aktiver in die Lösungsfindung der zweiten Einheit eingreifen und beispielsweise neue Suchräume vorgeben, Parameter der zweiten Einheit ändern oder modulieren, oder auf andere Weise das Finden einer geeigneten Lösung unterstützen.

Auf diese Weise befinden sich also im Speicher der dritten Einheit, bevorzugt festprogrammiert, die Rahmenbedingungen des Gesamtsystems, wie etwa Verbote, Prioritäten und ein Wertesystem. Auch eine Verarbeitungsbeschleunigung kann erreicht werden, indem bestimmte Lösungen ausgeschlossen werden. Die dritte Einheit kann durch Aktionen wie Belohnung und Bestrafung oder durch Induzieren neuer Schrittweiten in die Lösungsfindung der zweiten Einheit aktiv eingreifen. Damit werden die Ausgabewerte der zweiten Einheit durch eine spezielle Art der Rückkopplung auch von der dritten Einheit beeinflusst.

Als weitere Option kann die dritte lernende Einheit Einfluss auf einen Timer und die damit verbundene Festlegung der Dominanz einzelner Einheiten in dem System nehmen, der wie in Zusammenhang mit Figur 4 oder 7 bereits beschrieben in einem System aus mehreren (z.B. hier drei) gekoppelten Einheiten implementiert ist. Beispielsweise kann die dritte Einheit überprüfen, ob die festgelegten Zeitparameter für die Übergabe der Dominanz zu sinnvollen Ergebnissen führen oder ob eine andere Verteilung bzw. Festlegung der Zeitspannen vorgegeben werden soll. Damit kann beispielsweise flexibel auf Situationen reagiert werden, die mehr grobe Kategorisierungen benötigen als üblich und z.B. in kürzerer Zeit entschieden werden müssen. Entsprechend können durch ein Signal von der dritten Einheit an das Timer-Modul bei Bedarf ein oder mehrere neue Zeitparameter für jedes der gekoppelten Netze festgelegt werden, anhand derer dann die weitere Festlegung der Dominanz wie bereits beschrieben vorgenommen wird. Ebenso könnte die dritte Einheit nach zeitlicher Auswertung der Eingabewerte feststellen, dass sich die Eingabewerte und damit die auszuwertenden Situationen sehr schnell massiv ändern, oder dass die Situation quasistatisch über lange Zeit unverändert bleibt, und auf dieser Basis andere Zeitparameter für die Verarbeitung vorgeben.

Die beschriebenen Elemente und Verfahrensschritte der Figuren 7 und 8 sollen selbstverständlich nicht auf die dargestellte Ausführungsform mit drei neuronalen Netzen beschränkt sein. Insbesondere kann die grundsätzliche Idee einer bewertenden Einheit grundsätzlich auf jedes System aus mindestens zwei künstlich lernenden Einheiten übertragen werden.

Ein weiteres Element eines intelligenten Systems aus mehreren gekoppelten künstlich lernenden Einheiten kann eine Spracheinheit sein. Dabei ist unter einer Sprache hier bevorzugt eine systeminterne Kommunikation zu verstehen, die optional auch zur Kommunikation mit anderen, gleichen oder ähnlichen Systemen angewendet werden kann. Insbesondere kann eine Spracheinheit dazu dienen, die durch die Ein- und Ausgabewerte des Systems dargestellten Situationen in einer abstrahierten Form wiederzugeben und zu verarbeiten. Bei einer Einheit, die nicht-überwacht lernt, können und sollen sich beispielsweise Klassifikationen ohne vorherige Vorgabe selbständig ausbilden; eine derartige eigene Einteilung des Systems (Erkennung von Situationen, Gegenständen und Bedingungen) kann als Sprache verstanden werden. Dabei kann eine Spracheinheit ebenfalls mit einem eigenen zugehörigen Speicher versehen sein und kann optional auch als neuronales Netz ausgebildet sein. Je nach Ausführungsform kann es sich anbieten, dass ein Sprachspeicher beispielsweise eng mit der zweiten, analysierenden Einheit des Systems (entsprechend den vorherigen Beispielvarianten) verbunden ist oder als Teil dieser Einheit ausgebildet ist. Falls der Spracheinheit ein eigener Speicher zugeordnet ist, kann dieser in Aufbau und Inhalten ähnlich dem Speicher der zweiten Einheit ausgebildet sein und optional mit diesem in Verbindung stehen, um z.B. neu erfasste Klassifizierungen auszutauschen. Es kann auch eine Verbindung nach außen zur Ein- und Ausgabe von Daten aus dem Sprachspeicher vorgesehen sein.

Bevorzugt kann eine solche Einheit die Speicherkategorien und Inhalte, die beispielsweise aus der Projektionsebene für eine Langzeitspeicherung abgespeichert wurden, in abstrakte Begriffe umsetzen, wobei auch eine Syntax und Semantik gebildet werden kann, die dann eine logische Anwendung und Verarbeitung der Inhalte erlaubt. Eine derartige Sprache könnte zur Kommunikation zwischen den einzelnen lernenden Einheiten des Systems angewendet werden und eine abstrakte Behandlung von Problemen ohne direkte Einbeziehung der physikalischen Eingabewerte ermöglichen.

In allen Ausführungsformen versteht es sich, dass die einzelnen Elemente, also z.B. Speicherelemente, neuronale Netze, Verbindungen zwischen den Einheiten und weiteres auch anders als hier dargestellt ausgeführt werden können. Beispielsweise können natürlich auch weitere Speicherelemente vorhanden sein, die in diesen schematischen Abbildungen nicht dargestellt sind, oder ein Teil oder alle dieser Speicher können in Form eines einzigen, z.B. entsprechend durch Adressierung unterteilten physischen Speicherelements vorliegen.

Die verschiedenen vorstehend beschriebenen Teilansätze können, insbesondere in Kombination miteinander, zu einem assoziativen und selbständig agierenden System führen. Derartige Systeme können einen wesentlich breiteren Anwendungsbereich abdecken als intelligente Systeme, die nur auf ein spezialisiertes Gebiet trainiert sind. In herkömmlichen Systemen entspricht die Datenverarbeitung dem Finden von Fehlerminima oder Erfolgsmaxima in einem vieldimensionalen Raum. Je mehr Dimensionen (durch Klassifikationen, Optionen, Hierarchieebenen) dieser Raum aufweist, umso eher kann das System in lokalen Minima oder Maxima hängen bleiben. Die zuvor beschriebene Kopplung und Beeinflussung einer zweiten Einheit durch eine erste Einheit in Form von Modulationsfunktionen, die auf Gewichte, Schrittweiten, Funktionen und weiteres angewendet werden, erlaubt dagegen Sprünge im Suchraum in zunächst nicht geprüfte und meist nicht relevante Bereiche, die aber ansonsten je nach festgelegter Schrittweite nie erreicht werden. Dabei kann sich auch die Aufgabe kurzzeitig verändern, da jeweils schnell geprüft wird, ob der neue Lösungsraum relevant ist.

Wenn beispielsweise ein potentiell gefährliches, aber nicht identifizierbares Tier aus den Eingabewerten erkannt wird, zu dem weder die erste noch die zweite Einheit ein passendes Bildmuster finden kann, kann das System nun durch eine modulierte Schrittweite (z.B. stochastisch induziert) in eine Geräuschanalyse springen und findet dort ein passendes Geräusch, das von dem nichtidentifizierbaren Tier aufgenommen wurde. Nun kann die so modulierte zweite Einheit prüfen, ob die gefundene Lösung auf die bisher nicht klassifizierbaren Bilder angewendet werden kann, was einer Assoziationsleistung entspricht.

Ebenso kann die Einführung einer Projektionsebene ein assoziatives Verhalten nachbilden, indem nun beispielsweise Entscheidungen (in Form von Ausgabewerten) mit früheren Entscheidungen verglichen werden können und optional auch bewertet werden können. Damit wird anstelle einer abstrakten Lernfähigkeit auf Basis von positiven oder negativen Belohnungen das Bewertungssystem assoziativ ergänzt. Findet beispielsweise das System im Sprunggebiet keine besseren Lösungen, kann es zurück in den Bereich der bisher besten Lösung springen, die durch Bewertungen in der Projektionsebene festgelegt und optional gespeichert wurde, und kann eine neue Sprungvariante starten. Auf diese Weise kann beispielsweise die Modulation durch eine erste Einheit immer von einem geeigneten Startpunkt aus durchgeführt werden, der auf Basis der Bewertung durch die dritte Einheit gefunden wird.

Als mögliches Anwendungsbeispiel soll ein persönliches, an einen Nutzer adaptiertes AI-System betrachtet werden. Im Idealfall kann ein derartiges System durch Kopplung mehrerer künstlich lernender Einheiten, die unter anderem die beschriebene Rückkopplung durch Modulation sowie mindestens eine bewertende Einheit mit entsprechenden Speichermöglichkeiten umfassen, ein intelligentes Verhalten im Sinne einer harten künstlichen Intelligenz entwickeln. Ein solches System soll bevorzugt frei assoziieren können und Probleme selbständig klassifizieren können. Außerdem soll ein nutzerspezifisches Verhalten möglich sein, so dass das AI-System individuell auf einen Nutzer eingehen kann, also insbesondere erfassen und/oder lernen kann, welche Interessen, Eigenarten, Stimmungen, Emotionen, Charaktereigenschaften und welchen Wissenstand der Nutzer hat.

Dabei können solche und andere von außen erfasste Daten dem System hinzugefügt werden. Auch Aktualisierungen des Gesamtsystems sind möglich, um beispielsweise die Bewertungssysteme bzw. Klassifizierungen innerhalb bestimmter Grenzen zu verändern. Bevorzugt sind aber Mechanismen vorhanden, die einen Export von Daten aus dem System vollständig verhindern, insbesondere, da es auf einer sehr persönlichen Ebene arbeitet. Persönliche Daten sollen daher nicht nach außen gelangen und optional auch nicht zugänglich sein. Beispielsweise kann dabei auch vorgesehen sein, dass das AI-System vorrangig offline arbeitet, also ohne Verbindung zu externen Kommunikationsnetzen oder anderen Schnittstellen. Zur Aktualisierung des Systems oder zum Laden von Hintergrundwissen und anderen Daten kann dann eine zeitlich begrenzte, sichere Verbindung hergestellt werden, die beispielsweise vollständig vom Nutzer kontrolliert werden kann. Dabei können z.B. Quellen der hinzugefügten Daten angegeben sein und dem Nutzer eine Auswahl gegeben werden, ob er der Verbindung zustimmt.

Es kann eine initiale Trainingsphase für das System vorgesehen sein, in dem eine Lernkommunikation mit einer fremden Person, einem vorgegebenen Trainingsdatensatz und/oder Daten, die nicht vom eigentlichen Nutzer des System stammen, erfolgt. Diese Trainingsphase kann dazu dienen, eine allgemeine Grundeinstellung für Themen, Wissen, Erfahrungen und Kenntnisse bereitzustellen, um später nur in Sonderfällen auf externe Daten zurückgreifen zu müssen. Dabei kann auch ein vorgegebener Kommunikationscharakter ebenso eingestellt werden wie eine initiale Tiefe der Lernprozesse und Assoziationen für einen allgemeinen Zustand. Weiter können in der Trainingsphase die Problemerkennung und angemessene Reaktionen auf Situationen ebenso wie assoziative Kommunikationsverläufe trainiert werden.

Nach Abschluss dieser initialen Trainingsphase, die beispielsweise durch den Hersteller erfolgen kann, kann eine zweite Trainingsphase durch einen Endnutzer erfolgen. Dabei können beispielsweise nun die Zeitparameter auf den Benutzer eingestellt werden (Synchronisation). Der zuvor initial eingestellte Kommunikationscharakter kann durch Lernen und Anpassung des Systems aus gekoppelten Netzen auf den Endnutzer (durch Spiegelung oder Komplementierung) angepasst werden. Ebenso können die zuvor für einen allgemeinen Nutzer vorgegebenen Charaktereigenschaften und Interessen nun auf den spezifischen Endnutzer angepasst werden. Darüber hinaus kann die Projektionsebene in beispielhaften Ausführungsformen, insbesondere in solchen, die eine visuelle Auswertung umfassen, ein aktuelles Bild ihres Zustandes erzeugen und auf einem Bildschirm anzeigen. Dieses überlagerte Bild erlaubt dann während einer Arbeitsphase und insbesondere während der Trainingsphase eine Auswertung durch einen externen Nutzer bzw. Trainer, der damit feststellen kann, wie das System die aktuelle Situation in etwa einschätzt. Auf diese Weise kann frühzeitig erkannt werden, wie das System arbeitet, oder gegebenenfalls auch eingegriffen werden, um bestimmte Aspekte zu korrigieren oder abzuändern und so die Trainingsphase zu beschleunigen.

Nach diesen Trainingsphasen ist das System vorzugsweise einsatzbereit. Es können aber auch später noch ergänzende Trainingsphasen genutzt werden.

Je nach Ausführungsform kann das AI-System unterschiedliche Schnittstellen aufweisen, um Umgebungsbedingungen und vom Nutzer durchgeführte Handlungen ebenso wie Gefühls- und Gemütszustände des Nutzers zu registrieren. Dazu können verschiedene Sensoren eingesetzt werden, wie etwa Kameras, Mikrophone, Bewegungssensoren, Infrarotsensoren, "künstliche Nasen", Ultraschallsensoren, und beliebige weitere. Diese können in geeigneten mobilen oder statischen Objekten einzeln, verteilt und/oder kombiniert angeordnet werden, um eine möglichst umfassende Analyse zu ermöglichen. Außerdem können weitere Schnittstellen vorgesehen sein, über die das AI-System mit dem Nutzer kommunizieren kann, also etwa Lautsprecher für eine Sprachausgabe oder Bildschirme und andere Anzeigemittel für visuelle Anzeigen und Textdarstellungen.

In einer möglichen Ausführungsform ist ein Objekt vorgesehen, in dem ein derartiges AI-System für einen Nutzer integriert ist. Es kann sich dabei um ein mobiles Objekt, wie ein technisches Gerät (z.B. Smartphone) handeln, aber insbesondere auch um einen Einrichtungsgegenstand oder einen Gebrauchsgegenstand wie eine Lampe, eine Vase, einen Bildschirm, einen Spiegel oder andere Objekte, die in einer Wohnung bereits heute einen festen Platz einnehmen. Die Aufgabe des Systems ist es, ein künstlicher persönlicher, intelligenter Begleiter für die Nutzerperson zu sein. Das System stellt die Identität des Nutzers fest und kommuniziert mit diesem beispielsweise über Sprache und/oder Bild, wenn es sich um einen Bildschirm handelt oder eine Projektion in den Raum installiert ist. Dem entsprechend ist die Ausgabe an eine Schnittstelle angeschlossen (z.B. Lautsprecher, Bildschirm, Projektor).

Auf der Basis der oben beschriebenen erfinderischen Elemente kann das System Situationen klassifizieren, gespeichertes und gelerntes Wissen einbringen und assoziieren. Es ist das Ziel, Inspiration zu vermitteln, Anregungen zu geben, Einsamkeit und Stimmungstiefs des Nutzers zu überbrücken, als Coach oder aber auch beruflicher Berater/Problemlöser zu fungieren. Als Anwendungsgebiete kommt hier die Nutzung als Freizeitbegleiter in Frage (hilft bei Langeweile, gibt Gesprächsimpulse, unterhält Menschen, gibt Lebenshilfe); als Inspirator, der intellektuelle, wissenschaftliche, künstlerische Impulse gibt; als Coach bzw. Berater, um eine psychologische oder intellektuelle Begleitung zu bieten, insbesondere auch für psychisch kranke Menschen; als Berater für diverse Alltagssituationen (Mode, Hygiene, Gesundheit, Pflichten, Pflege); als persönlicher Sekretär, wobei eine ausgedehnte Wissensdatenbank angelegt und genutzt werden kann; als Spielpartner für unterschiedlichste Spiele; und weitere.

Insbesondere kann ein derartiges System sich sowohl kurzfristig an den Nutzer anpassen, z.B. an eine aktuelle Stimmungslage, als auch langfristig, etwa an den Charaktertyp des Nutzers. Dazu können unter anderem die über die Projektionsebene verarbeiteten und daraufhin in einem Langzeitspeicher abgelegten Informationen genutzt werden. Idealerweise kann das System dazu mit Codes, biometrischer Nutzererkennung (Bild, Sprache, Fingerabdruck, Tonfall oder andere Merkmale) und anderen Zugangskontrollmöglichkeiten ausgestattet sein.

Bevorzugt kann mit einem derartigen System und den beschriebenen Verfahrensschritten ein moralisch-ethisches System implementiert werden. Beispielsweise kann der persönliche intelligente Begleiter zu befriedigenden und für den Nutzer und seine Umgebung nützlichen Taten ermuntern; es kann auf Art, Charakterlage und Stimmung des Nutzers angepasst auf moralisch-ethische Probleme aufmerksam machend und beispielsweise bestimmte Tugenden propagieren (Hilfsbereitschaft, Großzügigkeit, Güte, Mut, Weisheit).

Durch entsprechende Randbedingungen in der dritten, bewertenden Einheit kann das System so eingerichtet sein, dass es Schaden, Schmerz und Belastungen vermeidet, und zwar nicht nur für den Nutzer, sondern für alle durch seine Entscheidungen betroffenen Menschen. Im Fall zu erwartender schwerwiegender Fehlentscheidungen kann ein persönlicher Begleiter eine Diskussion aufnehmen, vor allem über die Folgen bestimmter Handlungsoptionen argumentieren und konstruktive Vorschläge für Alternativen unterbreiten. Dabei werden bevorzugt keine Handlungen vorgeschrieben, sondern Ideale, wie die Handlungen sein sollten oder könnten. Der persönliche Begleiter kann Dilemma-Situationen erkennen und den Nutzer darauf hinweisen, und dabei gleichzeitig nach alternativen Lösungen oder der günstigsten Lösung, die zur Auswahl steht, suchen. Insbesondere im Zusammenhang mit künstlerischen Arbeiten des Nutzers bietet ein persönlicher intelligenter Begleiter die Möglichkeit, zu unterstützen, allein über vorprogrammierte und erlernte Bewertungen. Dabei können Betrachtungen bereits an den Nutzer angepasst sein. Die Assoziationsfähigkeit des Systems spielt hier eine wesentliche Rolle.

Als weiteres Ausführungsbeispiel wird ein "intelligenter Spiegel" beschrieben. Im Eingangsbereich oder dem Badbereich befindet sich bereits heute ein Spiegel. Die bereits im vorherigen allgemeinen Beispiel beschriebenen Eingabe- und Ausgabeschnittstellen wie verschiedene Sensoren können in einem Spiegel auf einfache Weise integriert werden. Indem ein Gegenstand verwendet wird, den ein Nutzer zwar kurz, aber häufig passiert, können eine Vielzahl von Möglichkeiten in einem derartigen AI-System umgesetzt werden.

Beispielsweise können durch geeignete Kameras, Mikrophone, Bewegungsmelder, Ultraschallsensoren, künstliche Nasen, Infrarotsensoren und weitere eine Vielzahl von Informationen über den Nutzer und vorherrschende Situationen und Nutzergewohnheiten gesammelt werden, ohne dass diese aktiv eingegeben werden müssen. Besonders in einem Eingangsbereich kann auch eine Eingangs- und Ausgangskontrolle mit implementiert werden.

Auf diese Weise kann ein intelligentes AI-System den Nutzer auf Kleidungsprobleme hinweisen und beispielsweise Kleidungsempfehlungen geben; es kann auf die zu erwartende Witterung und auf notwendige Utensilien hinweisen, falls erkannt wird, dass diese fehlen. Gegenstände, die ein Nutzer mit sich führt, können erfasst und erkannt werden. Falls erforderlich, können in einem Dialog mit dem Nutzer (über Sprache oder andere Eingabemittel) Fragen geklärt werden, ob z.B. etwas gebraucht wird, vergessen wurde oder verloren gegangen ist.

Dabei können auch durch Mikrophone aufgenommene Kommentare mit eingebunden werden, so dass der Nutzer z.B. diese Prozesse aktiv unterstützen kann, indem er Situationen oder Gegenstände kommentiert oder aktiv zur Erfassung vorzeigt. Nach geraumer Zeit kann das AI-System auf diese Weise fast alle Gegenstände, Kleidungsstücke und deren Verbleib in der Wohnung kennen. Wird etwas gesucht, oder hat der Nutzer eine Frage zu seiner Kleidung, dem Nahrungsmittelbestand, Bücherbestand usw., kann das System mit Hinweisen helfen. Beispielsweise kann der Benutzer darauf hingewiesen werden, dass er eine Brille trug, als er die Wohnung betreten hat, und es kann geschlossen werden, dass sich die Brille innerhalb der Wohnung befinden muss.

Über einen Dialog können auch Terminkalender, Listen und andere Unterstützungshilfen des täglichen Lebens von dem AI-System geführt werden. Das System ist daher auch von besonderem Nutzen für alte und kranke Menschen oder generell Menschen, die auf irgendeine Weise eingeschränkt im Alltag sind.

Durch geeignete Auswertung erfasster Daten, z.B. einer Mimikerkennung und einer Auswertung der Stimmlage oder weiterer Daten, kann das System die Stimmung des Nutzers kurzfristig erfassen und darauf basierend auch entsprechende Hinweise geben, z.B. falls jemand hektisch eine lange Fahrt antreten will. Beispielsweise kann die erkannte Stimmung in die Bewertung einfließen, die in den vorstehenden Ausführungsbeispielen durch das bewertende dritte neuronale Netz durchgeführt wurde.

Dabei sind die Erfassungsmöglichkeiten sowie die Dialoge nicht zwingend an das Objekt, also hier den intelligenten Spiegel, gebunden. Um zu verhindern, dass ein Nutzer längere Gespräche mit dem AI-System an einem ungeeigneten Ort führen muss, kann das System daher über Lautsprecher, Mikrophone und andere Vorrichtungen, die an entsprechenden Stellen einer Wohnung verteilt sind, den Dialog mit dem Nutzer aufnehmen oder fortführen. Auch die Bestandteile des AI-Systems selbst können auf mehrere Module verteilt sein und beispielsweise über geeignete drahtlose oder drahtgebundene Kommunikationsschnittstellen miteinander in Verbindung stehen.

Für alle hier vorgestellten AI-Systeme soll bevorzugt gelten, dass die erfassten und gespeicherten Daten, insbesondere die personenbezogenen Daten streng geschützt sind. Dazu können auch Identifizierungssysteme eingebunden sein, die den Nutzer aus Bild, Ton, aber auch aus Bewegungsmerkmalen, einer Auswertung der Sprachbetonung oder beliebiger anderer biometrischer Eigenschaften zuverlässig identifizieren können. Damit kann verhindert werden, dass einem Gast oder einer anderen unbefugten Person im Dialog persönliche Informationen mitgeteilt werden.

Weitere mögliche Ausgestaltungen, die einzeln oder in beliebiger Kombination miteinander und mit den vorstehenden Ausführungsformen implementiert werden können, werden im Folgenden noch einmal zusammengefasst:

Beispielsweise kann gemäß einer Ausführungsform ein Verfahren in einem System aus mindestens zwei künstlich lernenden Einheiten umgesetzt werden, welche das Eingeben von Eingabewerten an mindestens eine erste künstlich lernende Einheit und eine zweite künstlich lernende Einheit umfasst, worauf ersten Ausgabewerte der ersten künstlich lernenden Einheit erhalten werden. Auf Grundlage der Ausgabewerte der ersten künstlich lernenden Einheit können eine oder mehrere Modulationsfunktionen gebildet werden, welche dann auf einen oder mehrere Parameter der zweiten künstlich lernenden Einheit angewendet werden. Dabei kann es sich bei dem einen oder mehreren Parameter um Parameter handeln, welche die Verarbeitung von Eingabewerten und das Gewinnen von Ausgabewerten in der zweiten künstlich lernenden Einheit auf irgendeine Weise beeinflussen. Außerdem werden Ausgabewerte der zweiten künstlich lernenden Einheit erhalten. Diese können beispielsweise modulierte Ausgabewerte der zweiten Einheit darstellen.

Auf diese Weise werden zwei künstlich lernende Einheiten miteinander gekoppelt, ohne eine direkte Rückkopplung der Eingabe- oder Ausgabewerte zu verwenden. Stattdessen wird eine der Einheiten genutzt, um die Funktion der zweiten Einheit durch Modulation bestimmter funktionsrelevanter Parameter zu beeinflussen, so dass eine neuartige Kopplung entsteht, die zu anderen Ergebnissen bzw. Ausgabewerten führt als in herkömmlichen lernenden Einheiten. Darüber hinaus kann durch die Bearbeitung von Eingabewerten in zwei gekoppelten Einheiten ein Ergebnis in kürzerer Zeit bzw. mit einer tiefergehenden Analyse als in herkömmlichen Systemen erreicht werden, so dass die Effizienz insgesamt gesteigert werden kann. Insbesondere erfolgt eine rasche Klassifizierung des anstehenden Problems und Berücksichtigung schneller Veränderungen.

In einer beispielhaften Ausführungsform kann mindestens eine der künstlich lernenden Einheiten ein neuronales Netz mit einer Vielzahl von Knoten umfassen, insbesondere eine der lernenden Einheiten, auf die die Modulationsfunktionen angewendet werden. In diesem Fall können die ein oder mehreren Parameter mindestens eines der folgenden sein: eine Gewichtung für einen Knoten des neuronalen Netzes, eine Aktivierungsfunktion eines Knotens, eine Ausgabefunktion eines Knotens, eine Propagierungsfunktion eines Knotens. Dabei handelt es sich um wesentliche Bestandteile eines neuronalen Netzes, die die Verarbeitung von Daten in dem Netz festlegen. Anstelle einer Festlegung neuer Gewichtungen oder Funktionen für die Knoten kann durch die Modulationsfunktion eine Überlagerung vorhandener, selbstgelernter und/oder vordefinierter Funktionen des modulierten Netzes erreicht werden, die in Abhängigkeit von den Ergebnissen der ersten künstlich lernenden Einheit ist. Dabei kann diese Anwendung von Modulationsfunktionen insbesondere auch außerhalb einer Trainingsphase der Netze erfolgen und damit eine aktive Kopplung von zwei oder mehr Netzen bei der Verarbeitung von Eingabewerten erreichen.

Gemäß einer beispielhaften Ausführungsform kann jeder der künstlich lernenden Einheiten ein Klassifikationsspeicher zugeordnet sein, wobei jede der künstlich lernenden Einheiten eine Einordnung der Eingabewerte in ein oder mehrere Klassen vornimmt, welche in dem Klassifikationsspeicher gespeichert sind, wobei die Klassen jeweils in einer oder mehreren abhängigen Ebenen strukturiert sind, und wobei eine Anzahl der Klassen und/oder der Ebenen in einem ersten Klassifikationsspeicher der ersten künstlich lernenden Einheit geringer ist als eine Anzahl der Klassen und/oder der Ebenen in einem zweiten Klassifikationsspeicher der zweiten künstlich lernenden Einheit. Indem die Klassifikationsspeicher von zwei gekoppelten künstlich lernenden Einheiten auf diese Weise asymmetrisch gestaltet werden, kann eine parallele oder auch zeitabhängig wechselnde Bewertung der Eingabewerte mit unterschiedlicher Zielsetzung stattfinden, z.B. eine Kombination aus einer schnellen Klassifizierung der Eingabewerte und einer tiefgehenden, langsameren Analyse der Eingabewerte.

Alternativ oder zusätzlich zu der asymmetrischen Ausführung der Klassifikationsspeicher kann auch die Komplexität der ersten und zweiten künstlich lernenden Einheiten unterschiedlich gestaltet werden, so dass beispielsweise eine erste künstlich lernende Einheit einen deutlich geringeren Komplexitätsgrad aufweist als eine zweite künstlich lernende Einheit. Dabei kann für den Fall neuronaler Netze beispielsweise ein erstes neuronales Netz wesentlich weniger Knoten und/oder Schichten und/oder Kanten aufweisen als ein zweites neuronales Netz.

In einer möglichen Ausführungsform kann das Anwenden der mindestens einen Modulationsfunktion eine zeitabhängige Überlagerung von Parametern der zweiten künstlich lernenden Einheit bewirken, wobei die mindestens eine Modulationsfunktion eines der folgenden Merkmale umfassen kann: eine periodische Funktion, eine Stufenfunktion, eine Funktion mit kurzzeitig erhöhten Amplituden, eine gedämpfte Schwingungsfunktion, eine Schwebungsfunktion als Überlagerung mehrerer periodischer Funktionen, eine stetig zunehmende Funktion, eine stetig abnehmende Funktion. Ebenso sind Kombinationen oder zeitliche Abfolgen solcher Funktionen denkbar. Auf diese Weise können relevante Parameter einer lernenden Einheit zeitabhängig überlagert werden, so dass beispielsweise die Ausgabewerte aufgrund der Modulation in Suchräume "springen", die ohne die Überlagerung nicht erreicht würden.

Optional kann die zweite künstlich lernende Einheit ein zweites neuronales Netz mit einer Vielzahl von Knoten umfassen, wobei das Anwenden der mindestens einen Modulationsfunktion eine Deaktivierung von mindestens einem Teil der Knoten bewirkt. Diese Art der Deaktivierung kann auch als "Dropout" auf Grundlage der Ausgabewerte der ersten künstlich lernenden Einheit betrachtet werden und kann ebenfalls für neu erschlossene Suchbereiche in den Klassifikationen sowie für einen verringerten Rechenaufwand und damit eine beschleunigte Durchführung des Verfahrens sorgen.

In beispielhaften Ausführungsformen kann das Verfahren weiter das Festlegen einer aktuell dominierenden künstlich lernenden Einheit in dem System umfassen, sowie das Bilden von Gesamtausgabewerten des Systems aus den Ausgabewerten der aktuell dominierenden Einheit. Auf diese Weise können die zwei oder mehr Netze in dem System sinnvoll gekoppelt und synchronisiert werden.

Dabei kann beispielsweise die erste künstlich lernende Einheit mindestens so lange als dominierende Einheit festgelegt werden, bis ein oder mehrere Ausgabewerte der zweiten künstlich lernenden Einheit vorliegen. Auf diese Weise kann sichergestellt werden, dass das System zu jeder Zeit entscheidungssicher ist, also zu jeder Zeit (nach einem ersten Durchlauf der ersten lernenden Einheit) eine Reaktion des Systems möglich ist, auch bevor eine vollständige Einordnung der Eingabewerte durch alle vorhandenen künstlich lernenden Einheiten des Systems vorgenommen wurde.

Es ist dabei auch möglich, weiter einen Vergleich der derzeitigen Eingabewerte mit vorherigen Eingabewerten durch mindestens eine der künstlichen lernenden Einheiten des Systems anzuwenden, wobei, falls der Vergleich eine Abweichung ergibt, die über einem vorgegebenen Eingabe-Schwellwert liegt, die erste künstlich lernende Einheit als dominierende Einheit festgelegt wird. Auf diese Weise kann dafür gesorgt werden, dass auf wesentlich veränderte Eingabewerte (z.B. Erfassen einer neuen Situation durch Sensoren) sofort mit einer neuen Bewertung der Eingabewerte reagiert wird.

Zusätzlich oder alternativ kann weiter ein Vergleich von derzeitigen Ausgabewerten der ersten künstlich lernenden Einheit mit vorherigen Ausgabewerten der ersten künstlichen Einheit vorgenommen werden, wobei, falls der Vergleich eine Abweichung ergibt, die über einem vorgegebenen Ausgabe-Schwellwert liegt, die erste künstlich lernende Einheit als dominierende Einheit festgelegt wird. Durch Bewertung von Abweichungen in den Ausgabewerten, beispielsweise bei Vorliegen abweichender Klassen als Ergebnis im Vergleich zu einem früheren Durchlauf, können damit ebenfalls indirekt Veränderungen der Eingabewerte erkannt werden, die eine gewisse Signifikanz aufweisen und damit eine neue Klassifizierung sinnvoll machen.

Das System kann in gewissen Ausführungsformen weiter einen Timer umfassen, in dem ein oder mehrere vorgegebene Zeitspannen gespeichert sind, die einer oder mehreren der künstlich lernenden Einheiten zugeordnet sind, wobei der Timer dazu eingerichtet ist, für jeweils eine der künstlich lernenden Einheiten den Ablauf der dieser Einheit zugeordneten vorgegebenen Zeitspanne zu messen. Ein derartiges Element bildet eine Möglichkeit, die unterschiedlichen Einheiten eines Systems beispielsweise zu synchronisieren und zu steuern, wann Ausgabewerte einer bestimmten Einheit erwartet oder weiterverarbeitet werden. Damit kann durch einen Timer eine einstellbare Latenzzeit des Gesamtsystems definiert werden, innerhalb derer eine Entscheidung als Gesamtausgabewert des Systems vorliegen soll. Diese Zeit kann beispielsweise wenige ms betragen, z.B. 30 oder 50 ms, und kann unter anderem abhängig von der vorhandenen Topologie der rechnenden Einheiten und den vorliegenden Recheneinheiten (Prozessoren oder andere Datenverarbeitungsmittel) sein.

Dabei kann beispielsweise das Messen der zugeordneten vorgegebenen Zeitspanne für eine der künstlich lernenden Einheiten gestartet werden, sobald diese künstlich lernende Einheit als dominierende Einheit festgelegt wird. Auf diese Weise kann sichergestellt werden, dass eine Einheit innerhalb einer vorgegebenen Zeit eine Lösung erarbeitet oder optional die Datenverarbeitung sogar abgebrochen wird.

In einer möglichen Ausführungsform kann die zweite künstlich lernende Einheit als dominierende Einheit festgelegt werden, falls eine für die erste künstlich lernende Einheit vorgegebene erste Zeitspanne in dem Timer abgelaufen ist. Dies sorgt dafür, dass bereits vor der Analyse der Eingabewerte durch weitere künstlich lernende Einheiten eine Reaktion auf Grundlage der ersten künstlichen Einheit möglich ist, während anschließend die Daten detaillierter durch die zweite Einheit ausgewertet werden.

In beliebigen Ausführungsformen können die Eingabewerte beispielsweise eines oder mehrere der folgenden umfassen: durch einen oder mehrere Sensoren erfasste Messwerte, durch eine Benutzerschnittstelle erfasste Daten, aus einem Speicher abgerufene Daten, über eine Kommunikationsschnittstelle empfangene Daten, von einer Recheneinheit ausgegebene Daten. Es kann sich also z.B. um von einer Kamera erfasste Bilddaten, um Audiodaten, um Positionsdaten, um physikalische Messwerte wie Geschwindigkeiten, Abstandsmesswerte, Widerstandswerte und allgemein jeden beliebigen Wert handeln, der von einem geeigneten Sensor erfasst wird. Ebenso können Daten von einem Benutzer über eine Tastatur oder einen Bildschirm eingegeben oder ausgewählt werden und optional auch mit anderen Daten wie etwa Sensordaten verknüpft werden.

Es versteht sich, dass die vorstehend beschriebenen Beispiele beliebig miteinander kombiniert werden können. Beispielsweise kann in jeder der beschriebenen Ausführungsformen auch ein Timer, der in Zusammenhang mit Figur 4 oder Figur 7 beschrieben wurde, vorhanden sein. Ebenso können die lernenden Einheiten in allen Beispiele Klassifikationsspeicher aufweisen, wie sie als Beispiel in Verbindung mit Figur 5 oder Figur 8 beschrieben wurden. Alle diese Varianten sind wiederum auf eine Kopplung auch von mehr als zwei oder drei künstlich lernenden Einheiten anwendbar.

## Patentansprüche

1. Prozessorimplementiretes Verfahren in einem System aus mindestens einer ersten (710, 810), einer zweiten (720, 820) und einer dritten (730, 830) künstlich lernenden Einheit, umfassend:
Eingeben von ersten Eingabewerten (Xᵢ) an die erste künstlich lernende Einheit (710, 810), wobei die Eingabewerte Sensorwerte und/oder Audiodaten und/oder Bilddaten umfassen, und Erhalten von ersten Ausgabewerten der ersten künstlich lernenden Einheit, wobei die erste künstlich lernenden Einheit ein neuronales Netz mit einer Vielzahl von Knoten umfasst;
Bilden einer oder mehrerer Modulationsfunktionen (f_{mod_f}, f_{mod_w}) auf Grundlage der ersten Ausgabewerte der ersten künstlich lernenden Einheit (710, 810) und/oder auf Grundlage der Ausgabewerte der dritten künstlich lernenden Einheit (730, 830);
Anwenden der gebildeten einen oder mehreren Modulationsfunktionen (f_{mod_f}, f_{mad_w}) auf einen oder mehrere Parameter der zweiten künstlich lernenden Einheit, wobei die ein oder mehreren Parameter die Verarbeitung von Eingabewerten und das Gewinnen von Ausgabewerten in der zweiten künstlich lernenden Einheit beeinflussen,
wobei die zweite künstlich lernende Einheit (720, 820)ein neuronales Netz mit einer Vielzahl von Knoten umfasst, wobei die Anzahl der Knoten der zweite künstlich lernende Einheit deutlich größer als die Anzahl der Knoten der ersten künstlich lernenden Einheit ist, und wobei der ein oder mehrere Parameter mindestens eines der folgenden ist: eine Gewichtung (wᵢ) für einen Knoten des neuronalen Netzes, eine Aktivierungsfunktion (fₐₖₜ) eines Knotens, eine Ausgabefunktion (fₒᵤₜ) eines Knotens, eine Propagierungsfunktion eines Knotens;
Eingeben der ersten Eingabewerte auch an mindestens die zweite künstlich lernende Einheit (720, 820), und Erhalten von zweiten Ausgabewerten auf Grundlage der Eingabewerte von der mindestens einen zweiten künstlich lernenden Einheit (720, 820);
mindestens vorübergehendes Speichern von Situationsdaten, wobei die Situationsdaten erste Eingabewerte und/oder zweite Ausgabewerte der mindestens einen zweiten Einheit umfassen;
Verwenden der Situationsdaten als Eingabewerte der dritten künstlich lernenden Einheit, wobei die dritte künstlich lernende Einheit (730, 830) dritte Ausgabewerte in Reaktion auf die Eingabewerte erzeugt; und Prüfen, ob die zweiten Ausgabewerte der mindestens einen zweiten Einheit eine oder mehrere vorgegebene Bedingungen erfüllen, auf Grundlage der dritten Ausgabewerte;
wobei die ersten Ausgabewerte und/oder die zweiten Ausgabewerte als direkte oder indirekte Steuersignale für Aktoren eines automatisierten Systems verwendet werden, wobei nach Ablauf einer ersten Zeitspanne die ersten Ausgabewerte verwendet werden und wobei nach Ablauf einer zweiten Zeitpanne, die mit Ablauf der ersten Zeitspanne gestartet wird, die zweiten Ausgabewerte verwendet werden.

2. Verfahren nach Anspruch 1,
wobei die zweiten Ausgabewerte verworfen werden, falls die Prüfung ergibt, dass die Ausgabewerte mindestens eine vorgegebene Bedingung nicht erfüllen.

3. Verfahren nach Anspruch 1 oder 2, weiter umfassend Entscheiden, ob zumindest ein Teil der aktuellen Situationsdaten dauerhaft gespeichert werden sollen, und
Übertragen der Situationsdaten, die dauerhaft gespeichert werden sollen, an einen Langzeitspeicher.

4. Verfahren nach Anspruch 3, wobei das Entscheiden, ob zumindest ein Teil der aktuellen Situationsdaten dauerhaft gespeichert werden soll, abhängig ist von dem Ergebnis des Prüfens, ob die zweiten Ausgabewerte eine oder mehrere vorgegebene Bedingungen erfüllen.

5. Verfahren nach einem der vorhergehenden Ansprüche, wobei das Speichern der Situationsdaten weiter das Speichern von Zeitinformationen für die Eingabewerte und/oder Ausgabewerte umfasst.

6. Verfahren nach Anspruch 5, wobei die Zeitinformationen eines oder mehrere Zeitintervalle umfassen, denen ein oder mehrere Eingabewerte und/oder Ausgabewerte zugeordnet werden.

7. Verfahren nach einem der vorhergehenden Ansprüche, wobei die Situationsdaten mindestens für eine vorgegebene Zeitspanne vorübergehend gespeichert werden, und wobei mindestens eine der künstlich lernenden Einheiten (710, 720, 730, 810, 820, 830) dazu eingerichtet ist, die Zeitspanne festzulegen oder zu ändern.

8. Verfahren nach einem der vorhergehenden Ansprüche, umfassend das Vergleichen von aktuellen Ausgabewerten der mindestens einen zweiten Einheit mit Ausgabewerten, die in den Situationsdaten gespeichert sind.

9. Verfahren nach einem der vorhergehenden Ansprüche, wobei jeder der künstlich lernenden Einheiten (810, 820, 830) ein Klassifikationsspeicher (812, 822, 832) zugeordnet ist, wobei jede der künstlich lernenden Einheiten bei der Erzeugung der Ausgabewerte eine Einordnung der Eingabewerte in ein oder mehrere Klassen (K1, ..., Kj, Km, Kn) vornimmt, welche in dem jeweiligen Klassifikationsspeicher (812, 822, 832) gespeichert sind, wobei die Klassen jeweils in einer oder mehreren abhängigen Ebenen strukturiert sind, und wobei eine Anzahl der Klassen und/oder der Ebenen in einem Klassifikationsspeicher der ersten (812) oder der dritten (832) künstlich lernenden Einheit geringer ist als eine Anzahl der Klassen und/oder der Ebenen in einem Klassifikationsspeicher (822) der zweiten künstlich lernenden Einheit.

10. Verfahren nach einem der vorhergehenden Ansprüche, wobei die ersten
Eingabewerte mindestens eines der folgenden umfassen: durch einen oder mehrere Sensoren erfasste Messwerte, durch eine Benutzerschnittstelle erfasste Daten, aus einem Speicher abgerufene Daten, über eine Kommunikationsschnittstelle empfangene Daten, von einer Recheneinheit ausgegebene Daten.

11. System, umfassend
einen Prozessor,
einen nicht flüchtigen computerbelastabren Speicher und minestens eine erste (710, 810), eine zweite (720, 820) und eine dritte (730, 830) künstlich lernende Einheit,
wobei der Prozessor dazu eingreichtet ist, ein Verfahren nach einem der vorhergenden Ansprüche auszuführen.

12. System nach Anspruch 11,
weiter umfassend mindestens ein Sensorelement und/oder mindestens eine Erfassungseinheit, wobei die von dem Sensorelement und/oder der Erfassungseinheit erfassten Werte zumindest zum Teil als die ersten Eingabewerte (Xᵢ) verwendet werden.

13. System nach einem der Ansprüche 11 oder 12, weiter umfassend mindestens ein Ausgabemodul zum Ausgeben von Ausgabewerten an einen Benutzer, wobei das Ausgabemodul mindestens eines der folgenden umfasst: einen Bildschirm, einen Touchscreen, einen Lautsprecher, ein Projektionsmodul.

14. System nach einem der Ansprüche 11 bis 13, wobei jeder der künstlich lernenden Einheiten ein Klassifikationsspeicher (812, 822, 832) zugeordnet ist, wobei jede der künstlich lernenden Einheiten dazu eingerichtet ist, bei der Erzeugung der Ausgabewerte eine Einordnung der Eingabewerte in ein oder mehrere Klassen (K1, ... Kj, Km, Kn) vorzunehmen, welche in dem Klassifikationsspeicher (812, 822, 832) gespeichert sind, wobei die Klassen jeweils in einer oder mehreren abhängigen Ebenen strukturiert sind, und wobei eine Anzahl der Klassen und/oder der Ebenen in einem Klassifikationsspeicher der ersten (812) oder der dritten (832) künstlich lernenden Einheit geringer ist als eine Anzahl (m) der Klassen und/oder der Ebenen in einem Klassifikationsspeicher (822) der zweiten künstlich lernenden Einheit.

## Claims

1. Processor-implemented method in a system comprising at least a first (710, 810), a second (720, 820) and a third (730, 830) machine learning unit, comprising:
inputting first input values (Xᵢ) to the first machine learning unit (710, 810), wherein the input values comprise sensor values and/or audio data and/or image data, and obtaining first output values of the first machine learning unit, wherein the first machine learning unit comprises a neural network with a plurality of nodes;
forming one or more modulation functions (f_{mod_f}, f_{mod_w}) based on the first output values of the first machine learning unit (710, 810) and/or based on the output values of the third machine learning unit (730, 830);
applying the formed one or more modulation functions (f_{mod_f}, f_{mod_w}) to one or more parameters of the second machine learning unit, wherein the one or more parameters influence the processing of input values and the obtaining of output values in the second machine learning unit,
wherein the second machine learning unit (720, 820) comprises a neural network with a plurality of nodes, wherein the number of nodes of the second machine learning unit is significantly larger than the number of nodes of the first machine learning unit, and wherein the one or more parameters is at least one of the following: a weighting (wᵢ) for a node of the neural network, an activation function (fₐₖₜ) of a node, an output function (fₒᵤₜ) of a node, a propagation function of a node; inputting the first input values also to at least the second machine learning unit (720, 820), and obtaining second output values based on the input values from the at least one second machine learning unit (720, 820);
at least temporarily storing situation data, wherein the situation data comprise first input values and/or second output values of the at least one second unit;
using the situation data as input values of the third machine learning unit, wherein the third machine learning unit (730, 830) generates third output values in response to the input values;
and checking whether the second output values of the at least one second unit satisfy one or more predetermined conditions, based on the third output values;
wherein the first output values and/or the second output values are used as direct or indirect control signals for actuators of an automated system, wherein after the expiration of a first time period, the first output values are used and wherein after the expiration of a second time period, which starts with the expiration of the first time period, the second output values are used.

2. Method according to claim 1,
wherein the second output values are discarded if the check reveals that the output values do not satisfy at least one predetermined condition.

3. Method according to claim 1 or 2, further comprising:
deciding whether at least a part of the current situation data should be permanently stored, and
transferring the situation data that should be permanently stored to a long-term memory.

4. Method according to claim 3, wherein the decision whether at least a part of the current situation data should be permanently stored depends on the result of the check whether the second output values satisfy one or more predetermined conditions.

5. Method according to any one of the preceding claims, wherein storing the situation data further comprises storing time information for the input values and/or output values.

6. Method according to claim 5, wherein the time information comprises one or more time intervals to which one or more input values and/or output values are assigned.

7. Method according to any one of the preceding claims, wherein the situation data are at least temporarily stored for a predetermined period of time, and wherein at least one of the machine learning units (710, 720, 730, 810, 820, 830) is configured to set or change the period of time.

8. Method according to any one of the preceding claims, comprising comparing current output values of the at least one second unit with output values that are stored in the situation data.

9. Method according to any one of the preceding claims, wherein each of the machine learning units (810, 820, 830) is assigned a classification memory (812, 822, 832), wherein each of the machine learning units performs a classification of the input values into one or more classes (K1, ..., Kj, Km, Kn) when generating the output values, which are stored in the respective classification memory (812, 822, 832), wherein the classes are each structured in one or more dependent levels, and wherein a number of classes and/or levels in a classification memory of the first (812) or the third (832) machine learning unit is less than a number of classes and/or levels in a classification memory (822) of the second machine learning unit.

10. Method according to any one of the preceding claims, wherein the first input values comprise at least one of the following: measurement values captured by one or more sensors, data captured by a user interface, data retrieved from a memory, data received via a communication interface, data output by a computing unit.

11. System, comprising:
a processor,
a non-volatile computer-readable memory, and
at least a first (710, 810), a second (720, 820), and a third (730, 830) machine learning unit,
wherein the processor is configured to execute a method according to any one of the preceding claims.

12. System according to claim 11,
further comprising at least one sensor element and/or at least one detection unit, wherein the values detected by the sensor element and/or the detection unit are used at least in part as the first input values (Xᵢ).

13. System according to any one of claims 11 or 12, further comprising at least one output module for outputting output values to a user, wherein the output module comprises at least one of the following: a screen, a touchscreen, a speaker, a projection module.

14. System according to any one of claims 11 to 13, wherein each of the machine learning units is assigned a classification memory (812, 822, 832), wherein each of the machine learning units is configured to perform a classification of the input values into one or more classes (K1, ..., Kj, Km, Kn) when generating the output values, which are stored in the classification memory (812, 822, 832), wherein the classes are each structured in one or more dependent levels, and wherein a number of classes and/or levels in a classification memory of the first (812) or the third (832) machine learning unit is less than a number (m) of classes and/or levels in a classification memory (822) of the second machine learning unit.

## Revendications

1. Procédé mis en œuvre par processeur dans un système composé d'au moins une première (710, 810), une deuxième (720, 820) et une troisième (730, 830) unité d'apprentissage automatique, comprenant :
l'entrée de premières valeurs d'entrée (Xᵢ) dans la première unité d'apprentissage automatique (710, 810), les valeurs d'entrée comprenant des valeurs de capteur et/ou des données audio et/ou des données d'image, et
l'obtention de premières valeurs de sortie de la première unité d'apprentissage automatique, la première unité d'apprentissage automatique comprenant un réseau neuronal avec une pluralité de nœuds ;
la formation d'une ou plusieurs fonctions de modulation (f_{mod_f}, f_{mod_w}) sur la base des premières valeurs de sortie de la première unité d'apprentissage automatique (710, 810) et/ou sur la base des valeurs de sortie de la troisième unité d'apprentissage automatique (730, 830) ;
l'application de la ou des plusieurs fonctions de modulation formées (f_{mod_f}, f_{mod_w}) à un ou plusieurs paramètres de la deuxième unité d'apprentissage automatique, le ou les plusieurs paramètres influençant le traitement des valeurs d'entrée et l'obtention de valeurs de sortie dans la deuxième unité d'apprentissage automatique,
la deuxième unité d'apprentissage automatique (720, 820) comprenant un réseau neuronal avec une pluralité de nœuds, le nombre de nœuds de la deuxième unité d'apprentissage automatique étant nettement supérieur au nombre de nœuds de la première unité d'apprentissage automatique, et le ou
les plusieurs paramètres étant au moins l'un des suivants : une pondération (wᵢ) pour un nœud du réseau neuronal, une fonction d'activation (fₐₖₜ) d'un nœud, une fonction de sortie (fₒᵤₜ) d'un nœud, une fonction de propagation d'un nœud ;
l'entrée des premières valeurs d'entrée également dans au moins la deuxième unité d'apprentissage automatique (720, 820), et l'obtention de deuxièmes valeurs de sortie sur la base des valeurs d'entrée de l'au moins une deuxième unité d'apprentissage automatique (720, 820) ;
le stockage au moins temporaire de données de situation, les données de situation comprenant des premières valeurs d'entrée et/ou des deuxièmes valeurs de sortie de l'au moins une deuxième unité ;
l'utilisation des données de situation comme valeurs d'entrée de la troisième unité d'apprentissage automatique, la troisième unité d'apprentissage automatique (730, 830) générant des troisièmes valeurs de sortie en réaction aux valeurs d'entrée ;
et la vérification si les deuxièmes valeurs de sortie de l'au moins une deuxième unité satisfont une ou plusieurs conditions prédéterminées, sur la base des troisièmes valeurs de sortie ;
les premières valeurs de sortie et/ou les deuxièmes valeurs de sortie étant utilisées comme signaux de commande directs ou indirects pour des actionneurs d'un système automatisé, les premières valeurs de sortie étant utilisées après l'expiration d'une première période de temps et les deuxièmes valeurs de sortie étant utilisées après l'expiration d'une deuxième période de temps, qui commence à l'expiration de la première période de temps.

2. Procédé selon la revendication 1,
les deuxièmes valeurs de sortie étant rejetées si la vérification révèle que les valeurs de sortie ne satisfont pas au moins une condition prédéterminée.

3. Procédé selon la revendication 1 ou 2, comprenant en
outre la décision si au moins une partie des données de situation actuelles doivent être stockées de manière permanente, et le transfert des données de situation qui doivent être stockées de manière permanente vers une mémoire à long terme.

4. Procédé selon la revendication 3, la décision si au moins une partie des données de situation actuelles doivent être stockées de manière permanente dépendant du résultat de la vérification si les deuxièmes valeurs de sortie satisfont une ou plusieurs conditions prédéterminées.

5. Procédé selon l'une des revendications précédentes, le stockage des données de situation comprenant en outre le stockage d'informations temporelles pour les valeurs d'entrée et/ou les valeurs de sortie.

6. Procédé selon la revendication 5, les informations temporelles comprenant un ou plusieurs intervalles de temps auxquels une ou plusieurs valeurs d'entrée et/ou valeurs de sortie sont associées.

7. Procédé selon l'une des revendications précédentes, les données de situation étant stockées de manière temporaire au moins pendant une période de temps prédéterminée, et au moins l'une des unités d'apprentissage automatique (710, 720, 730, 810, 820, 830) étant configurée pour fixer ou modifier la période de temps.

8. Procédé selon l'une des revendications précédentes, comprenant la comparaison de valeurs de sortie actuelles de l'au moins une deuxième unité avec des valeurs de sortie qui sont stockées dans les données de situation.

9. Procédé selon l'une des revendications précédentes, chacune des unités d'apprentissage automatique (810, 820, 830) étant associée à une mémoire de classification (812, 822, 832), chacune des unités d'apprentissage automatique effectuant un classement des valeurs d'entrée dans une ou plusieurs classes (K1, ..., Kj, Km, Kn) lors de la génération des valeurs de sortie, lesquelles sont stockées dans la mémoire de classification respective (812, 822, 832), les classes étant chacune structurées en un ou plusieurs niveaux dépendants, et un nombre de classes et/ou de niveaux dans une mémoire de classification de la première (812) ou de la troisième (832) unité d'apprentissage automatique étant inférieur à un nombre de classes et/ou de niveaux dans une mémoire de classification (822) de la deuxième unité d'apprentissage automatique.

10. Procédé selon l'une des revendications précédentes,
les premières valeurs d'entrée comprenant au moins l'un des éléments suivants : des valeurs de mesure capturées par un ou plusieurs capteurs, des données capturées par une interface utilisateur, des données récupérées d'une mémoire, des données reçues via une interface de communication, des données sorties par une unité de calcul.

11. Système, comprenant
un processeur,
une mémoire non volatile lisible par ordinateur et
au moins une première (710, 810), une deuxième (720, 820) et une troisième (730, 830) unité d'apprentissage automatique,
le processeur étant configuré pour exécuter un procédé selon l'une des revendications précédentes.

12. Système selon la revendication 11,
comprenant en outre au moins un élément capteur et/ou au moins une unité de capture, les valeurs capturées par l'élément capteur et/ou l'unité de capture étant utilisées au moins en partie comme les premières valeurs d'entrée (Xᵢ).

13. Système selon l'une des revendications 11 ou 12, comprenant en outre au moins un module de sortie pour sortir des valeurs de sortie à un utilisateur, le module de sortie comprenant au moins l'un des éléments suivants : un écran, un écran tactile, un haut-parleur, un module de projection.

14. Système selon l'une des revendications 11 à 13, chacune des unités d'apprentissage automatique étant associée à une mémoire de classification (812, 822, 832), chacune des unités d'apprentissage automatique étant configurée pour effectuer un classement des valeurs d'entrée dans une ou plusieurs classes (K1, ..., Kj, Km, Kn) lors de la génération des valeurs de sortie, lesquelles sont stockées dans la mémoire de classification (812, 822, 832), les classes étant chacune structurées en un ou plusieurs niveaux dépendants, et un nombre de classes et/ou de niveaux dans une mémoire de classification de la première (812) ou de la troisième (832) unité d'apprentissage automatique étant inférieur à un nombre (m) de classes et/ou de niveaux dans une mémoire de classification (822) de la deuxième unité d'apprentissage automatique.
